# EUROPEAN PATENT APPLICATION

(11) **EP 2 700 580 A1**
(43) Date of publication of application: **26.02.2014**
(21) Application number: 13193369.9
(22) Date of filing: 06.07.2009
(51) Int. Cl.: B65B 21/20

(54) **Packaging machine and method of packaging articles**

(30) Priority: 04.07.2008 GB 0812201
(62) Divisional of application: 09774595.4
(71) Applicant: MeadWestvaco Packaging Systems, LLC, Richmond, VA 23219-0501 (US)
(72) Inventor: Poutot, Benoit, F-36000 Chateauroux (FR)
(74) Representative: Rule, John Eric

(57) **Abstract**

A movable head for a tool for packaging articles, which head comprises a means of securement to a tool, a chassis, and one or more gripper elements that are moveable relative to the chassis and that are capable of engaging items from a continuously moving stream of items.

## Description

### Field of the invention

The present invention relates generally to the field of packaging systems that can load articles into cartons. More specifically, though not exclusively, the invention relates to a moveable tool head for use in such systems, which moveable tool head allows transfer of items between moving streams of items, and further relates to systems to which such a moveable tool head is applied.

### Cross-Referenced Applications

This application references another application entitled "Packaging Machine and Methods of Packaging Articles" filed by the same applicant, on the same day, the content of which is entirely incorporated in this disclosure, by reference. In addition, the content of GB Patent Application Number 0812233.5 is also entirely incorporated into this disclosure, by reference.

### Background to the invention.

In the field of packaging systems, it is advantageous that the rate at which articles and cartons may be fed in, and the rate at which loaded cartons may be produced, is maximised. However, known packaging systems suffer from wear, which leads to breakages and consequent repair costs and loss of revenue during system down-time. Also contributing to down-time is changeover time in which adjustments must be made to the layout of the system as packaging requirements (such as carton configurations) change.

Known packaging systems comprise many elements that are required to move to a location, stop, perform an action, then move to a second location and so on. This behaviour requires a lot of energy to achieve and places high mechanical strain on the mechanisms of the system. This behaviour further leads to a reduction in throughput since each time the elements stop time is lost that could have been used to progress the loading process.

There is a need, therefore, for a packaging system that provides for continuous motion of the articles and cartons as they undergo the packaging process. This will increase throughput and reduce wear. Further, by providing means of transferring articles from one conveyor of the system to another, substantially transversely to the direction of the streams on those conveyors, the overall length of the system can be significantly reduced, thereby reducing the required footprint of the system, and increasing throughput rates by decreasing the necessary part length of articles passing through the system.

Additionally, by arranging a packaging system with multiple tools, each of which is capable of engaging items from multiple streams, it is possible to reconfigure the packaging system quickly and easily, simply by altering the way in which those tools are controlled. This reduces down-time experienced during changeover.

The present invention therefore seeks to overcome or at least mitigate the disadvantages of the prior art.

### Summary of the Invention

A first aspect of the present invention provides a system for packaging articles, which system comprises a first conveyor for conveying items to form a first stream of items, and a second conveyor for conveying items to form a second stream of items, and a first tool capable of engaging items from one or more of the two streams, and of transferring any items so engaged from one of the two streams, in a direction substantially transverse to that stream, and to deposit those items at an adjacent point in the other of the two streams, whilst at least one of those two streams is in continuous motion.

Preferably, said first stream is substantially parallel to said second stream.

Preferably, items of one stream are articles and the items of the other stream are cartons, and wherein the first tool is operable to: engage with selected ones of the articles forming one of the streams and to load them into selected cartons forming the other stream; and/or engage with selected ones of the cartons forming one of the streams and to apply them to selected ones of the articles forming the other of the two streams; to result in one or more loaded cartons.

Preferably, the system further comprises a third conveyor and a second tool, wherein items of one stream are articles and the items of the other stream are cartons, and wherein the first tool is further operable to engage selected articles forming the first stream and to deposit those articles onto the third conveyor, which conveyor conveys those articles to form a third stream, and wherein the second tool is operable to engage selected cartons forming the second stream and to apply those cartons to selected ones of the articles forming the third stream to result in one or more loaded cartons on the third conveyor.

Alternatively, one of the streams of items comprises a stream of loaded cartons, and the other of the streams of items comprises tertiary packaging, and wherein the first tool is so operable to result in one or more packages comprising one or more loaded cartons within a tertiary package.

Preferably, said system further comprises an intermediate stacking station and a tool that is operable to transfer items from one of the streams onto the stacking station whilst that stream is in continuous motion.

Preferably, the system further comprises a tool that is operable to engage groups of items that have been so transferred onto the intermediate stacking station, and to transfer groups of items that have been so engaged into cartons forming one of the streams.

Preferably, the or each tool that is operable to engage with items from, or to deposit items onto, a moving stream of items, comprises a head that is capable of movement, in the direction of motion of that moving stream of items, independently of the motion of the tool to which that head is attached.

Preferably, the head is capable of reciprocal linear movement.

Preferably, said head is operable so as to match the velocity of the stream of items with which it is to become engaged, such that, when so engaged, the velocity of the items in that stream is not affected by engagement of the head with selected items from that stream.

A second aspect of the present invention provides a method for packaging articles, which method comprises conveying items to form a first stream of items, and conveying items to form a second stream of items, engaging items from one or more of the two streams, and transferring any items so engaged from one of the two streams, in a direction substantially transverse to that stream, and to deposit those items at an adjacent point in the other of the two streams, whilst at least one of those two streams is in continuous motion.

Preferably, said first stream is conveyed substantially parallel to said second stream.

Preferably, items of one stream are articles and the items of the other stream are cartons, and further comprising: engaging selected ones of the articles forming one of the streams and loading them into selected cartons forming the other stream; and/or engaging with selected ones of the cartons forming one of the streams and applying them to selected ones of the articles forming the other of the two streams; to result in one or more loaded cartons.

Preferably, the items of the first stream are articles and the items of the second stream are cartons, and further comprising engaging selected articles from the first stream and depositing those articles onto a conveyor to form a third stream, and engaging selected cartons from the second stream and applying those cartons that have been so selected to selected ones of the articles forming the third stream to result in one or more loaded cartons.

Alternatively, one of streams of items comprises a stream of loaded cartons, and the other of the streams of items comprises tertiary packaging, and wherein the method results in one or more packages comprising one or more loaded cartons within a tertiary package.

Preferably, said method further comprises transferring items from one of the streams onto an intermediate stacking station whilst that stream is in continuous motion.

Preferably, the method further comprises engaging groups of items that have been so transferred onto the intermediate stacking station, and transferring groups of items that have been so engaged into cartons forming one of the streams.

Preferably, the method further comprises using a tool having a moveable head to engage with selected items from a stream of items, and controlling that moveable head so as to allow the selected items to be so engaged whilst continuously moving in the stream.

Preferably, the method further comprises accelerating the moveable portion of the head to match the velocity of the stream of items with which it is to become engaged, such that, when so engaged, the velocity of the items in that stream is not affected by engagement of the head with selected items from that stream.

A third aspect of the present invention provides a movable head for a tool for packaging articles, which head comprises a means of securement to a tool, a chassis, and one or more gripper elements that are moveable relative to the chassis and that are capable of engaging items from a continuously moving stream of items.

Preferably, the moveable head further comprises a drive means that is mechanically coupled to the gripper elements, such that the drive means is operable to accelerate the gripper elements relative to the chassis.

Preferably, the or each gripper element is slidably disposed upon a runner, and the drive means is operable to move the gripper means along that runner.

Preferably, the or each gripper element is fixed in position relative to a carriage, which carriage is slidably connected to the chassis, and wherein the drive means is operable to move the carriage relative to the chassis.

Preferably, the drive means rotates one of a nut or a threaded shaft about which the nut is disposed, and the gripper element is attached to the other of a nut or a threaded shaft about which the nut is disposed.

Alternatively, the drive means rotates a pinion that engages a rack, wherein the rack is fixed to one of the gripper element or the chassis, and the pinion is fixed relative to the other of the gripper element or the chassis.

Alternatively, there comprises a series of gripper elements disposed along the runner, and wherein articulated arrangements comprising a first member hinged to a second member, at adjacent ends thereof, to form an elbow, connect the gripper elements together.

Preferably, the articulated arrangements are disposed both sides of the runner, and wherein, between any two gripper elements that are hinged together by an articulated arrangement on a first side of the runner, is disposed a gripper element that is hinged to one of those two gripper elements, by an articulated arrangement disposed on an opposing second side of the runner.

Preferably, the elbows of each articulated arrangement comprise a follower that follows the path of a guide rail, and wherein spacing of the gripper elements that are linked to one another by those articulated arrangements is effected by moving that guide rail perpendicular to the runner, and thereby causing those articulated arrangements to hinge at their elbows.

Preferably, the gripper elements are shaped so as to be capable of engagement with "U"-shaped cartons.

Alternatively, the system further comprises a second tool, wherein the first stream of items comprises a stream of articles that are formed into spaced groups of two or more rows, and the second stream of items comprises a stream of "U"-shaped cartons, and wherein the first tool is operable to engage selected cartons from the second stream and to apply those cartons to selected groups of articles in a first of the two rows of the first stream, and wherein the second tool is operable to engage selected cartons from the second stream and to apply those selected cartons to selected groups of articles from a second of the rows of the second stream.

Preferably the rows of grouped articles forming the first stream are separated from one another by a distance less than the height of the articles forming those groups.

### Brief Description of the Drawings

Various embodiments and applications of the present invention will now be described, with reference to the accompanying Figures, in which:
Figures 1 to 7 illustrate a moveable tool head according to a first aspect of the present invention;
Figures 8 to 10 illustrate a moveable tool head according to a second aspect of the present invention;
Figures 11 to 19 illustrate a first embodiment of a packaging system application of a moveable tool head of the present application;
Figures 20 to 22 illustrate a second embodiment of a packaging system application of a moveable tool head of the present invention;
Figures 23 to 29 illustrate a third embodiment of a packaging system application of a moveable tool head of the present invention;
Figures 30 to 34 illustrate a fourth embodiment of a packaging system application of a moveable tool head of the present invention;
Figures 35 to 37 illustrate a fifth embodiment of a packaging system application of a moveable tool head of the present invention; and
Figures 38 to 42 illustrate a sixth embodiment of a packaging system application of a moveable tool head of the present invention.

### Detailed Description of the Invention

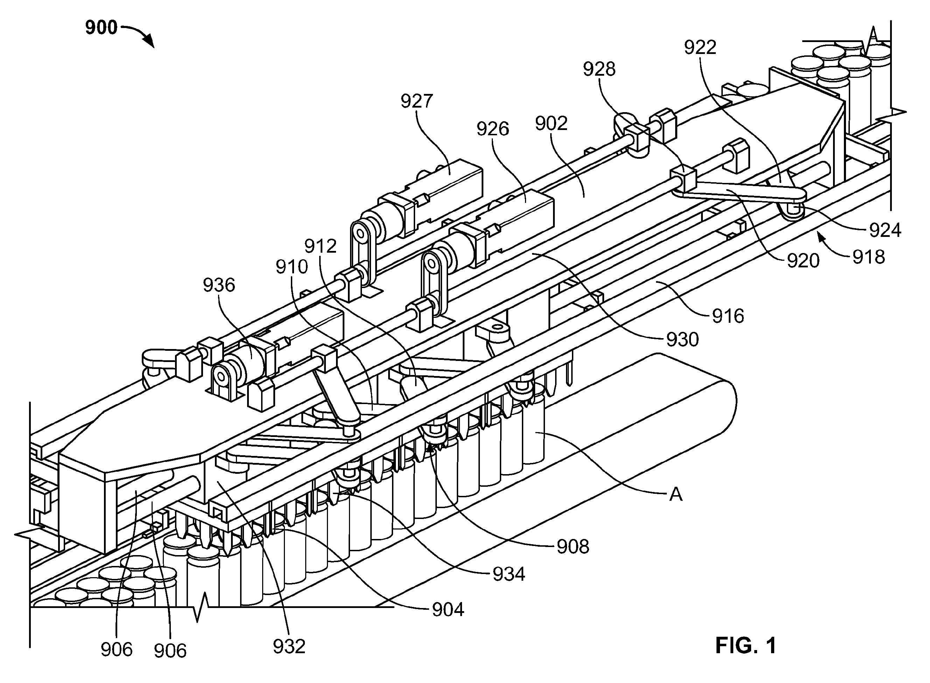

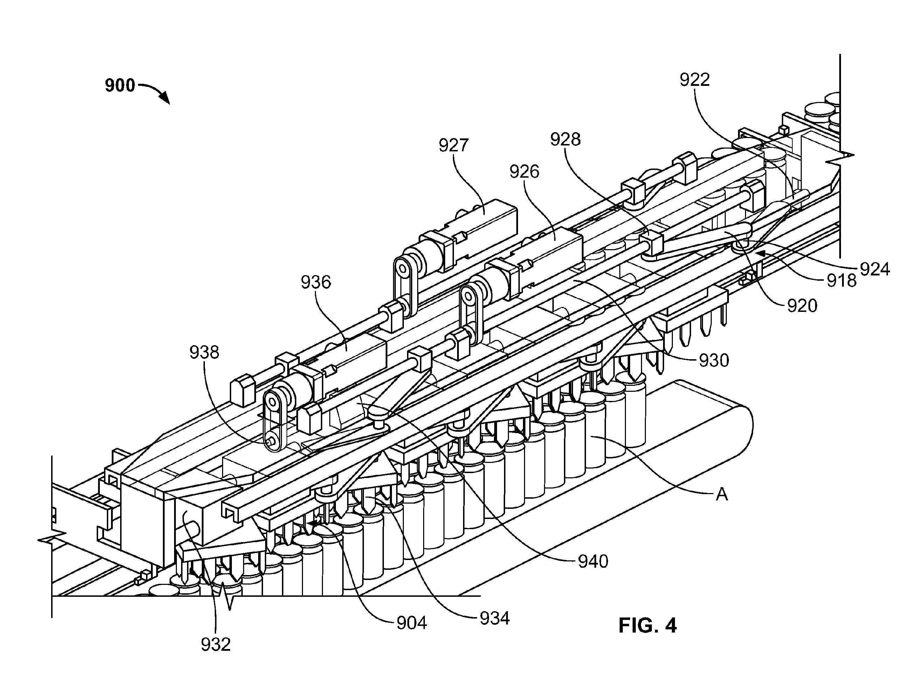

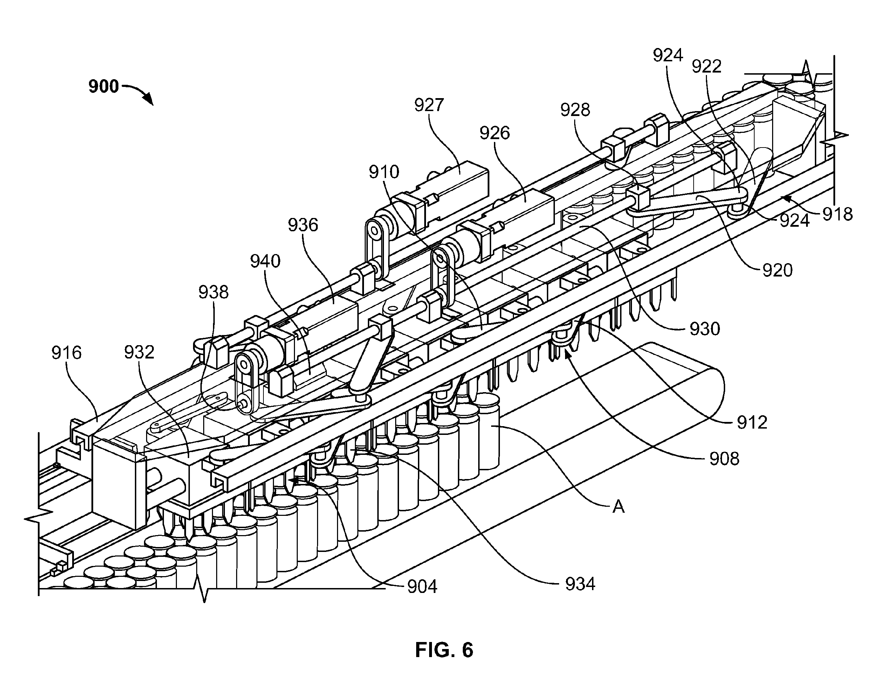

Figures 1 to 7 show a sliding head 900 for an articulated tool, according to a preferred embodiment of the present invention. The head 900 comprises a fixed chassis 902 to which a number of gripper elements 904 are attached that cooperate with one another to allow the head to engage with articles A or the like whilst they are moving.

The head comprises a number of gripper elements 904, slidably disposed along one or more runners 906 (the Figures show two runners 906 used for added stability of the gripper elements 904). The gripper elements 904 are arranged in a linear series, and a concertina arrangement of articulated links 908 extensibly connect each gripper element 904 to those gripper elements 904 adjacent to it.

Each arrangement of articulated links 908 comprises two members that are hinged to one another at one adjacent end, to form an "elbow" 914. One of the two members 910 is hinged, at an opposite end, to a first gripper element 904, and the other of the two members 912 is hinged, at an opposite end, to a second gripper element 904 adjacent the first.

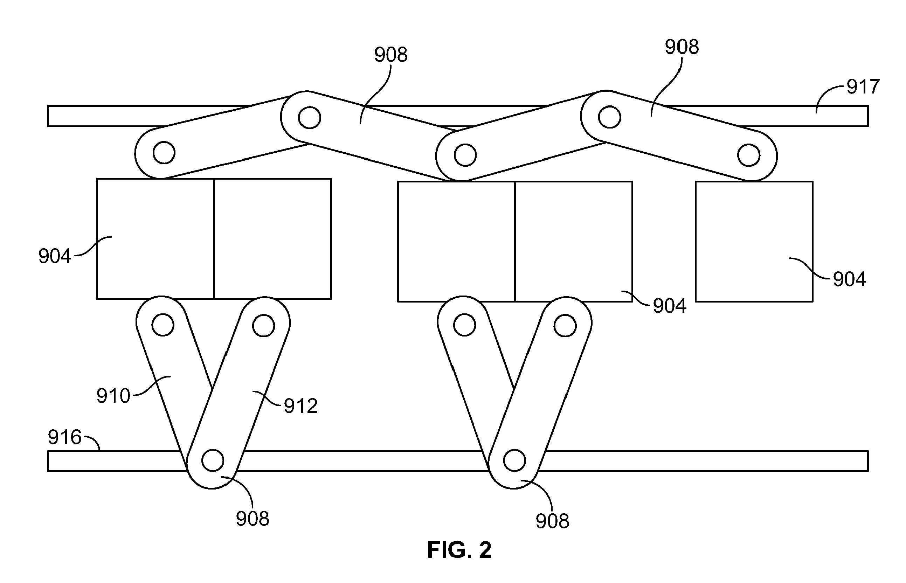

The arrangement of articulated links 908 are arranged either side of the runner 906, and disposed such that, on one side of the runner 906, they connect every other gripper element 904 of the linear series, which is to say, for example, the first, third, fifth etc gripper elements 904. Each gripper element 904 that is not connected to an articulated arrangement 908 on this side of the runner 906 is connected to an adjacent gripper element that is so connected, by an articulated arrangement on the opposing side of the runner 906. An example of this arrangement is shown in plan view in Figure 2. Thus, as an example: the first gripper element 904 is connected to the second gripper element 904 on a first side of the runner 906, and to the third gripper element on an opposite side of the runner 906; the third gripper element 904 is then connected to the fourth gripper element 904 on the first side, and to the fifth gripper element 904 on the second side.

The elbows 914 of each articulated arrangement 908 comprise a follower (not shown) that sits within a guide rail 916, 917. One such guide rail 916, 917 is disposed on each side of the runner 906. The followers are free to pivot about the elbow 914 of the articulated member 918 and can freely move along the guide rail 916 as the articulated members 908 hinge.

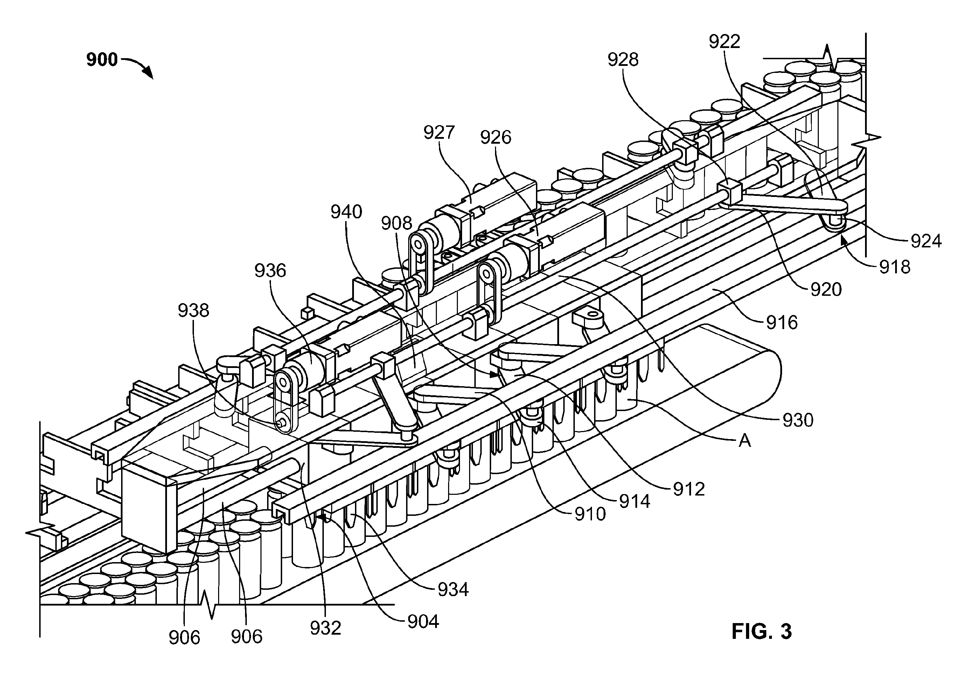

By moving the guide rails 916 in a direction perpendicular to the runner 906, the articulated members 908 are caused to hinge relative to one another and thereby to alter the spacing of the gripper elements 904 from one another. The space of each guide rail 916 from the runner 906 is set by the position of two articulated adjusters 918 (as shown in Figure 3), one of which is provided at each end of each guide rail 916.

Each articulated adjuster 918 comprises a first member 920 and a second member 922, which are hinged to one another at adjacent ends thereof to form an "elbow" 924. Each guide rail 916 is pivotally attached to one end of each of two articulated adjusters 918 at the elbows thereof: one at a first end of the guide rail 916, and a second at an opposing end of the guide rail 916. A first terminal end of each articulated adjuster 918 is hinged to a fixed point on the chassis 902 of the sliding head 900 whilst a second opposing terminal end of each articulated adjuster 918 is mechanically linked to one of two drive means 926. The articulated adjusters 918 connected to a first of the two guide rails 916 are mechanically linked to a respective first of the two drive means 926, whilst the articulated adjusters connected to a second of the two guide rails 917 are mechanically linked to a respective second of the two drive means 927.

The mechanical connection of each drive means 926, 927 to the relevant articulated adjusters 918 may take any form that may effect linear movement in the respective terminal ends thereof. As is shown best in Figure 1 the terminal ends of the articulated adjusters 918 each may comprise a pivotably connected threaded nut 928 that is disposed around a threaded shaft 930. Preferably, both articulated adjusters 918 in respect of a given guide rail 916 are connected to a common threaded shaft 930. In this case, rotation of the shaft 930, effected by the drive means directly 926, 927, or through a gearing arrangement, causes the threaded nut 928 to move along the shaft 930, and thus in a resulting linear displacement of the terminal ends of those two articulated adjusters 918. In the illustrated embodiment, the terminal ends of the articulated adjusters 918 move reciprocally toward and away from one another in response to rotation of the threaded shaft, with the opposing terminal ends thereof being those ends that are furthermost from one another. To accomplish this, the thread of the threaded shaft 930 can be reversed part way along its length so that rotation of the shaft in one direction results in this motion. Alternatively, the articulated adjusters 918 could be arranged such that of the two closest terminal ends thereof, one is threadedly connected to the shaft 930 and the other is a hinged connection to the chassis 902 of the sliding head 900. This removes the need for the threaded ends of the articulated adjusters 918 to move reciprocally toward and away from one another, and instead allows the adjusters 918 to function as the threaded ends move in the same direction.

As the terminal ends of the articulated adjusters that are connected to the drive means move relative to the opposing terminal ends thereof, the articulated adjusters 918 hinge about the elbows thereof, and about the opposing terminal ends thereof at which they hinge to the chassis 902. This hinging causes the elbows, and therefore each end of the guide rails 916, to move substantially perpendicularly to the runner 906.

As a guide rail 916 moves inwardly toward the runner 906, each articulated member 918 connected to that guide rail 916 is caused to hinge about its respective elbow 914, and therefore to increase the spacing between the terminal ends thereof. Since each terminal end of each articulated member 918 is hinged to a gripper element 904, this results in an equal adjustment to the spacing between all those gripper elements 904, of the linear series, that are linked to that guide rail. It should be noted that the spacing between any two gripper elements that are connected, via an articulated member that follows the other of the two guide rails 917, will not be affected, unless that guide rail 917 also moves relative to the runner 916. If this is not the case, these gripper elements 904 will slide along the runner without the spacing therebetween being altered.

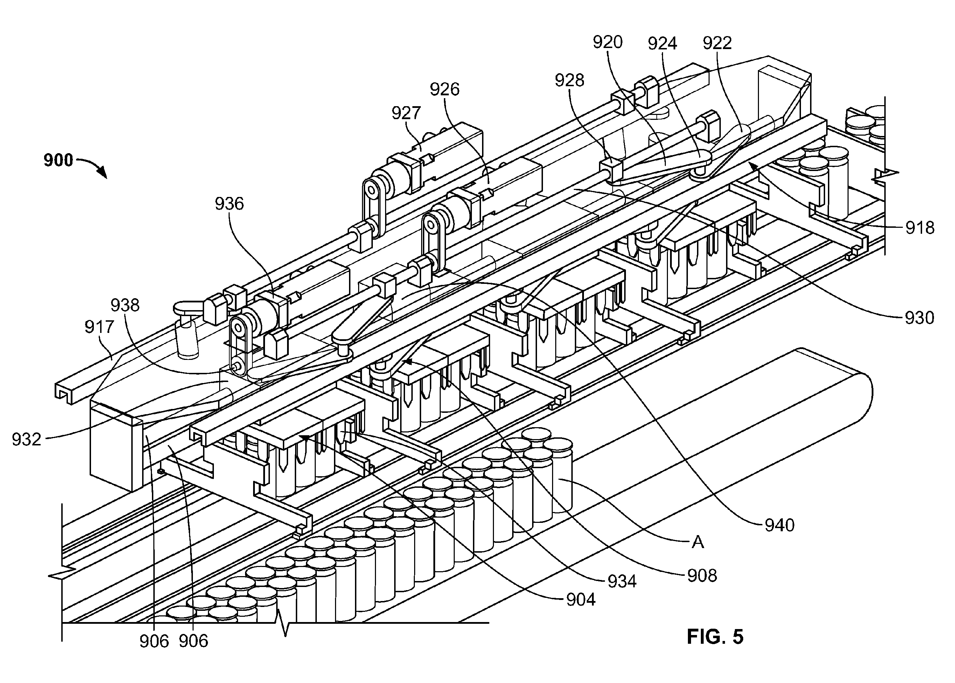

Therefore, by positioning the two guide rails 916, 917 at different distances from the runner 906 in relation to one another, the gripper elements 904 can be formed into spaced pairs as shown in Figure 5.

Each gripper element 904 comprises a follower 932 that is slidably disposed on the runner 906, and a gripper 934 that depends downwardly, from the follower 932, for engaging articles A and/or cartons. The gripper 934 may be, for example, one or more vacuum seals, or perhaps a mechanically articulated gripping mechanism.

Various possible constructions of gripper 934 are known in the art and do not limit the scope of the present invention as set out in the appended claims.

When the guide rails 916, 917 are held in a fixed position either side of the runner 906 by the respective independent drive means 926, 927 the series of gripper elements 904 are slidable along the runner 906 as a single unit. A third drive means 936 is mechanically linked to drive a third threaded shaft 938 to achieve this. Around this third threaded shaft 928 is disposed a nut 940 that is fixed to one of the gripper elements 904 of the series. Thus, once the guide rails 916, 917 are prevented from moving relative to the runner 906, rotation of this third drive means 936 will cause the entire series of gripper elements 904 to slide along the runner 906. Rotation of the drive means 936 in one direction will cause the gripper elements 904 to slide in a first direction, whilst rotation in the opposite direction will cause the gripper elements 904 to slide in a second, opposite, direction. Thus, by alternating the direction of rotation of the drive means 936, reciprocal linear motion of the gripper elements 904 along the runner 906 is effected.

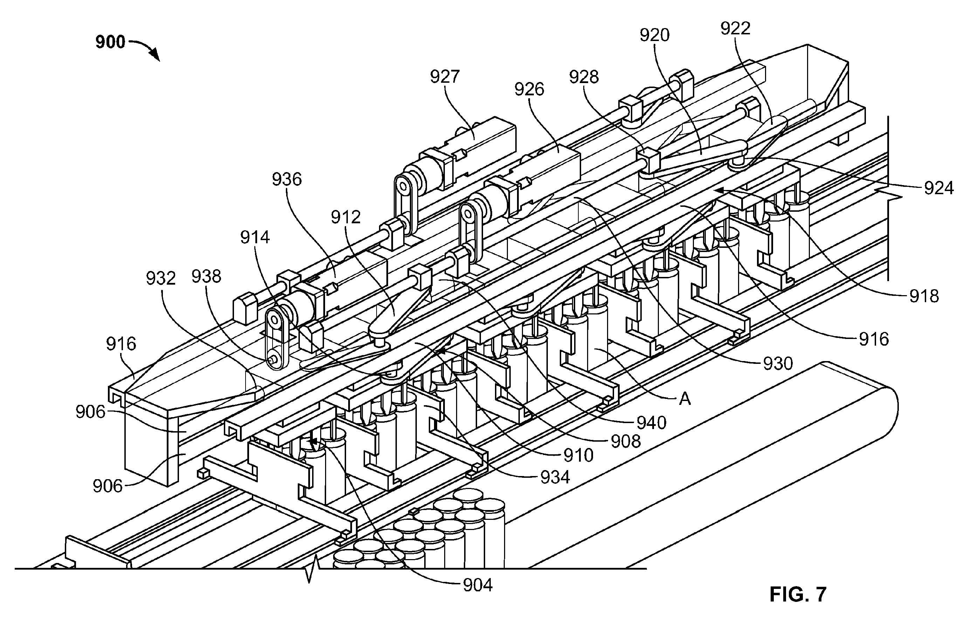

Optionally, each gripper element 904 further comprises an independent drive means (not shown), disposed internally or externally thereof. These independent drive means are operable to rotate the grippers so as to allow wider, or longer selections of articles to be engaged. This is particularly of use where the grippers 934 are rectangular, and arranged to engage arrays of articles having a different number of rows to the number of columns such as, for example, the 2x3 article arrays illustrated in Figure 7. By rotating selected ones of the grippers 934, and pairing the gripper elements 904 in the manner described above, the possible article array configurations that may be engaged by the grippers 934 may be reconfigured. Alternatively, the grippers 934 may be manually rotatable by a user, and lockable in different orientations on the follower 932 of a given gripper element 904.

Additionally, the gripper elements 904 may be detachable from the rest of the sliding head 900 such that different gripper elements 904 might be used as the requirements of use of the head 900 alter.

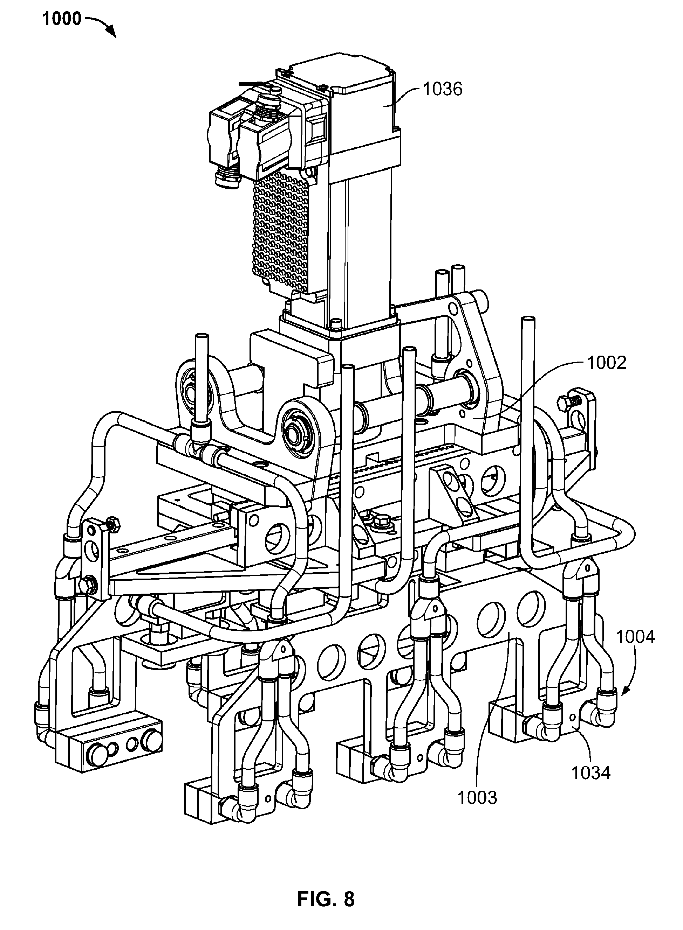

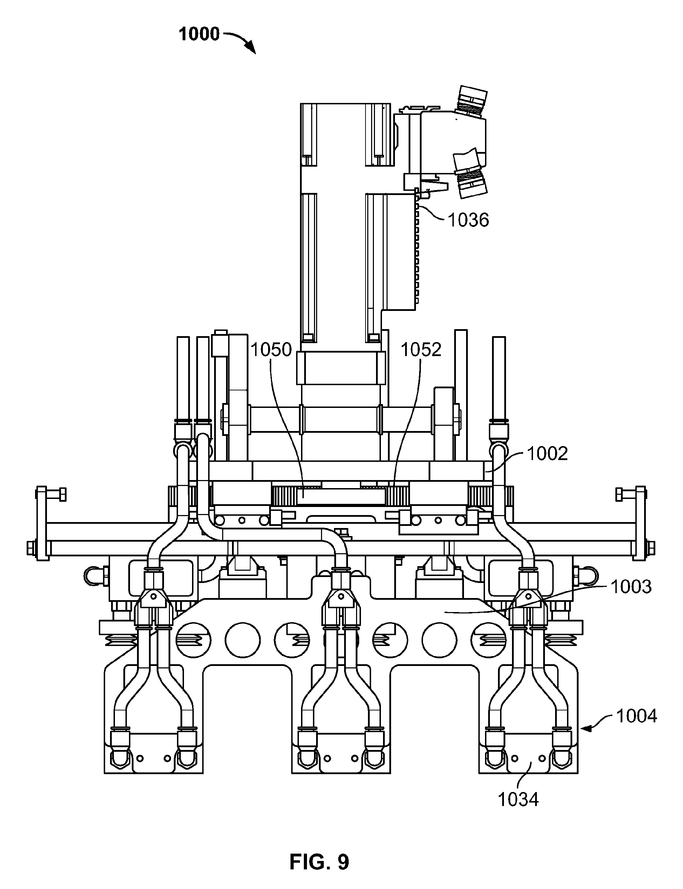

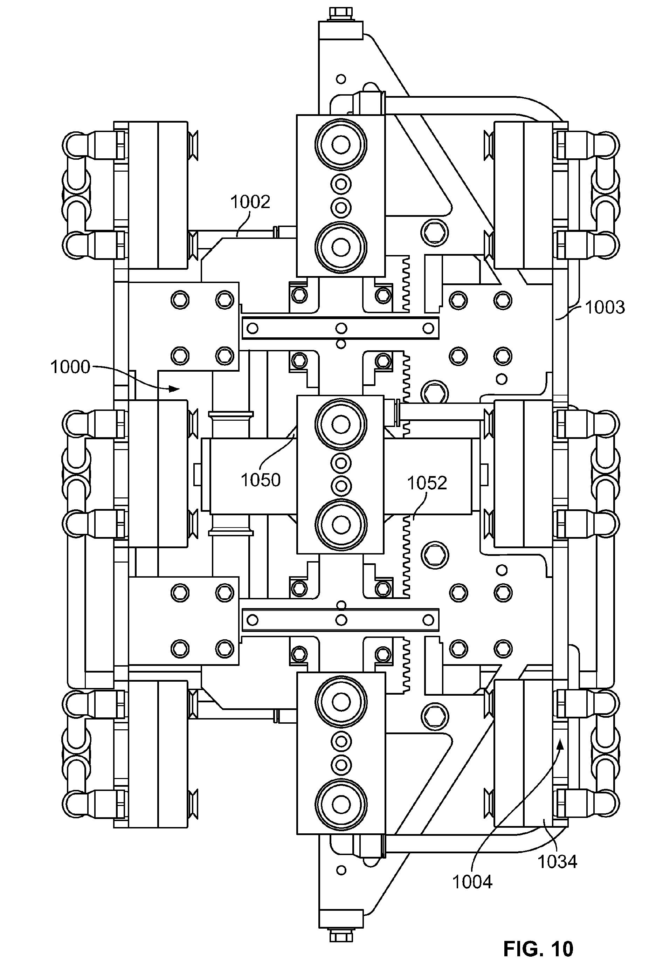

A second embodiment of a sliding head 1000 according to the present invention is illustrated in Figures 8 to 10. In this embodiment, the chassis 1002 is slidably attached to a carriage 1003, which chassis 1002 and carriage 1003 comprise a complementary rack 1052 and pinion 1050 arrangement. For example, the pinion 1050, connected to a drive means, may be mounted in the chassis 1002, and engages with the rack 1052 that is mounted to the carriage 1003. Naturally, this may be reversed, such that the pinion 1050 is mounted in the carriage 1003 and the rack 1052 fixed to the chassis 1002. Depending from the carriage 1003 are a number of gripper elements 1004 that terminate in grippers 1034, for example, suction heads. Unlike the first embodiment of the sliding head 900 described above, in this example of the second embodiment, the gripper elements 1004 are fixed relative to one another, although it is contemplated that this may not be the case, and that the gripper elements 1004 could be slidably mounted relative to one another so as to move relative to one another, in the manner described above.

Drive means 1036 drives the pinion 1052 such that movement of the carriage 1003 relative to the chassis 1002 is achievable.

In use, the above sliding head 900,1000 is advantageous at least in that the movement of the gripper elements 904, 1004 allows them to be aligned over selected articles A with which they are to be engaged, as those articles A are moving, by matching the velocity of those articles A with that of the gripper elements 904, 1004. Once the desired velocity is acquired, the sliding head 900, 1000 may be brought down onto the articles A such that the gripper elements 904, 1004 can engage with the selected articles A. After engagement has been achieved, the sliding head 900, 1000 can be raised so as to lift those selected articles A off whatever surface they were disposed upon. At a desired point, the engagement can be released so as to deposit those selected articles A.

By matching the velocity of the articles A to be engaged with the gripper elements 904, 1004 that are to engage them, it is possible to decrease the time taken to remove articles A from, say, a conveyor belt, as there is no requirement to stop that conveyor belt at regular intervals to allow selected articles A to be engaged. Further, the sliding head 900, 1000 advantageously reduces wear of many system components, since it minimises "stop - start" motion that causes strain on drive means and mechanical linkages.

One way in which the sliding head 900, 1000 might be used is to initially position the gripper elements 900, 1000 toward the upstream direction of the flow of articles A with which engagement is desired. In order to arrive at the desired alignment between the gripper element 904, 1004 and the articles, it is preferred that the acceleration of the gripper elements 904, 1004 is controlled, through operation of the relevant drive means 936, 1036, such that the velocity thereof reaches that of the relevant articles A at the moment those articles become aligned beneath the gripper elements 904. In this way the overall distance that the gripper elements 904 must travel in order to match the velocity of the articles A is minimised, and hence the overall dimensions of the sliding head 900, 1000 are also minimised. Naturally, other approaches are possible, such as accelerating the gripper elements to substantially the velocity of the articles before those articles become aligned beneath the gripper elements, and then to retard the velocity of the gripper elements 904, 1004 so as to allow the articles A to "catch up". Likewise, the articles A could alternatively be allowed to pass the gripper elements 904, 1004 at first, and then the gripper elements could be accelerated to catch up with the respective articles, being retarded to the correct velocity when they are in position.

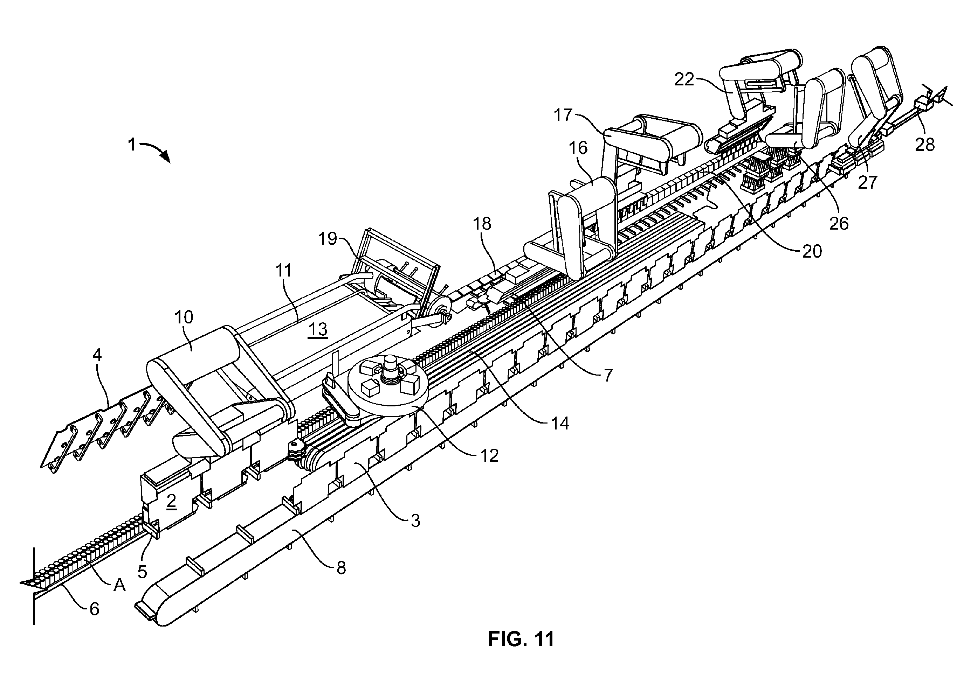

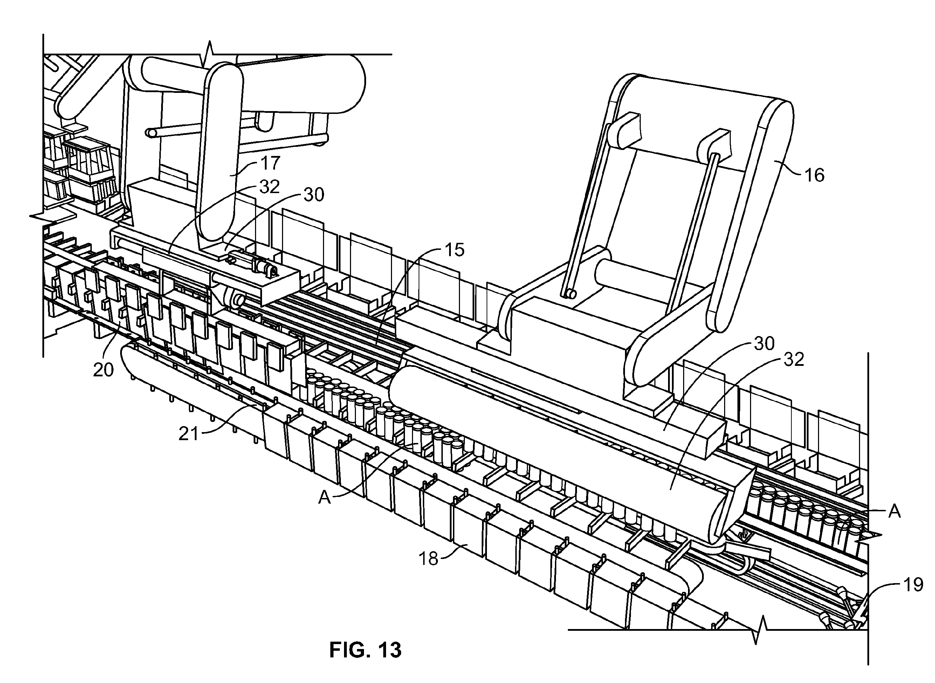

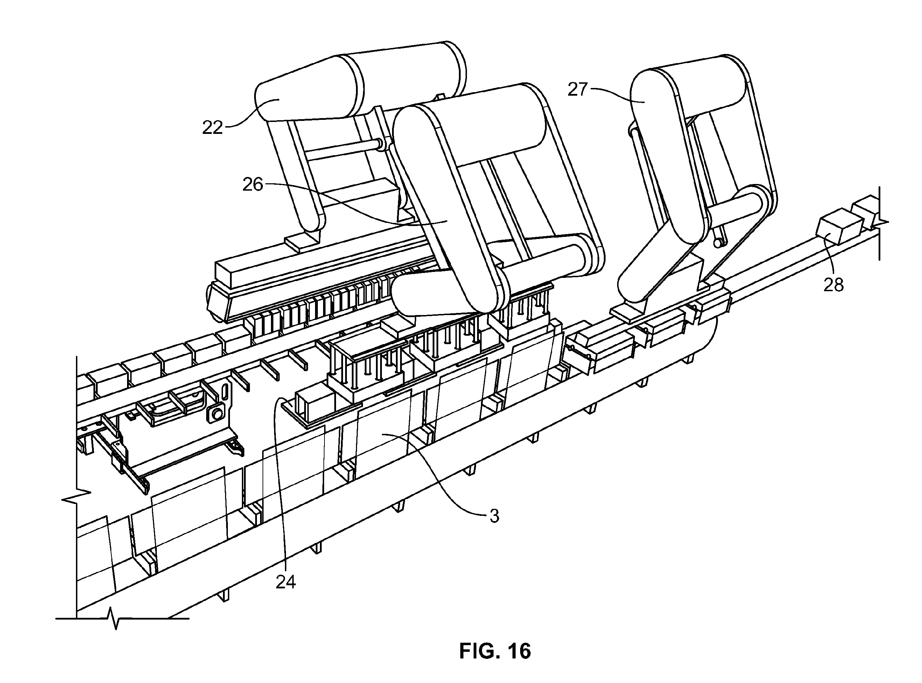

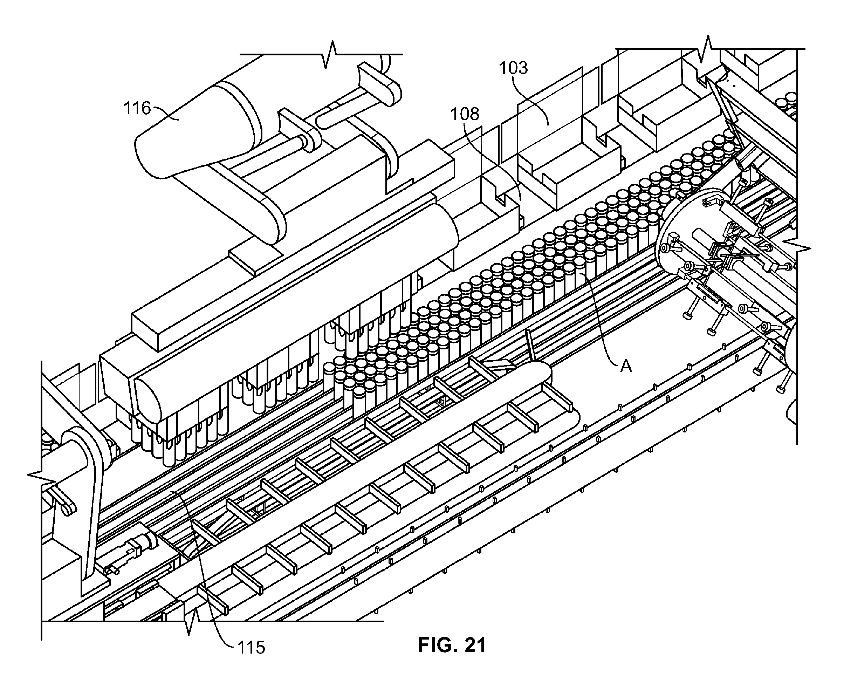

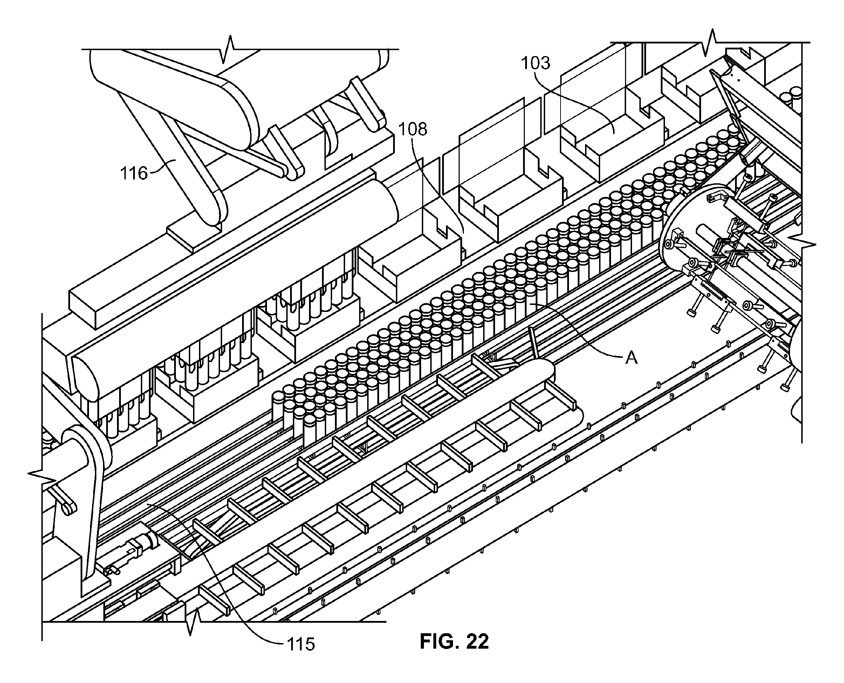

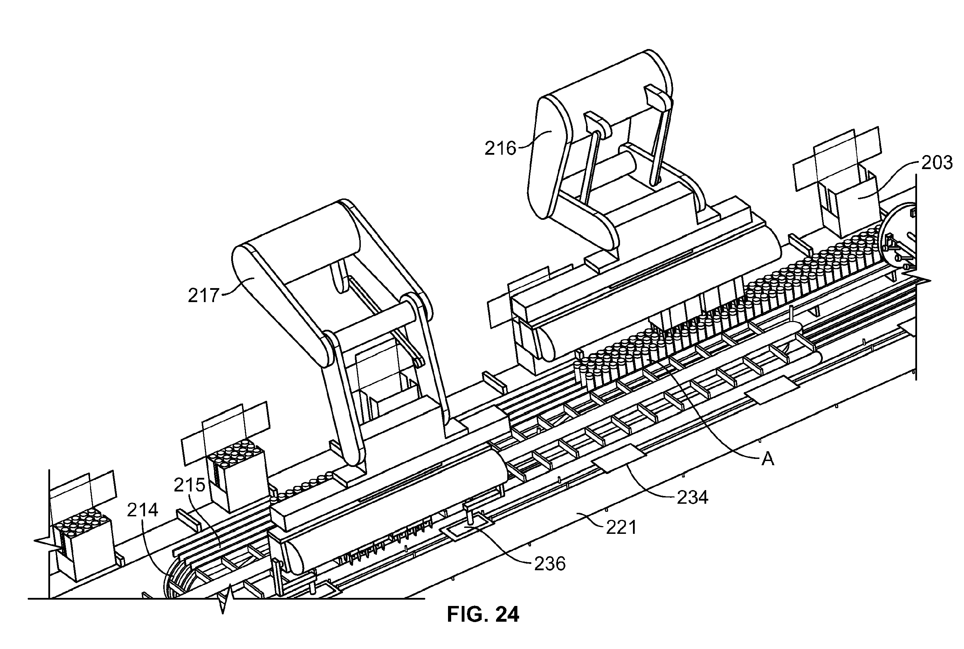

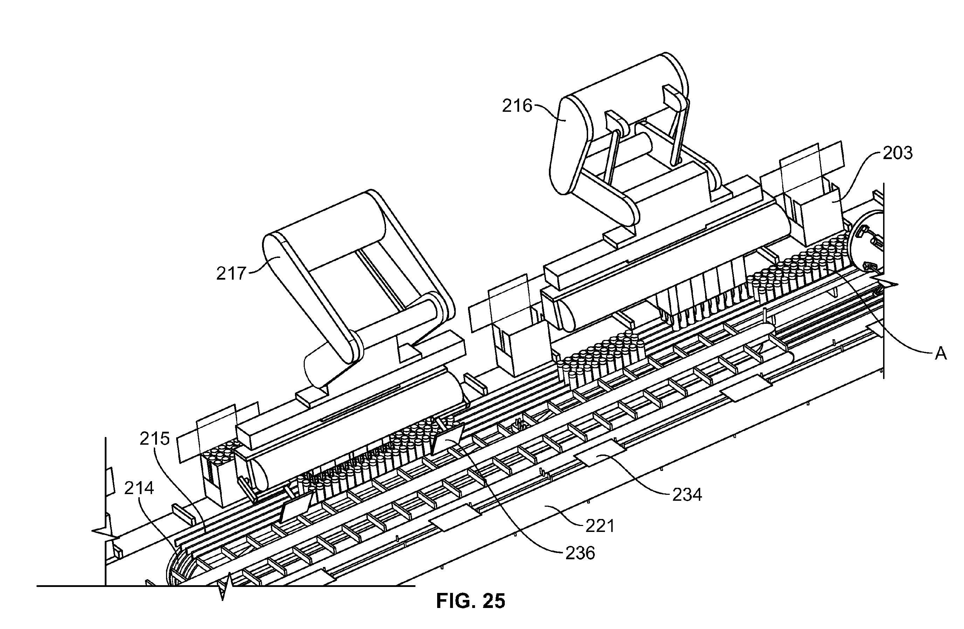

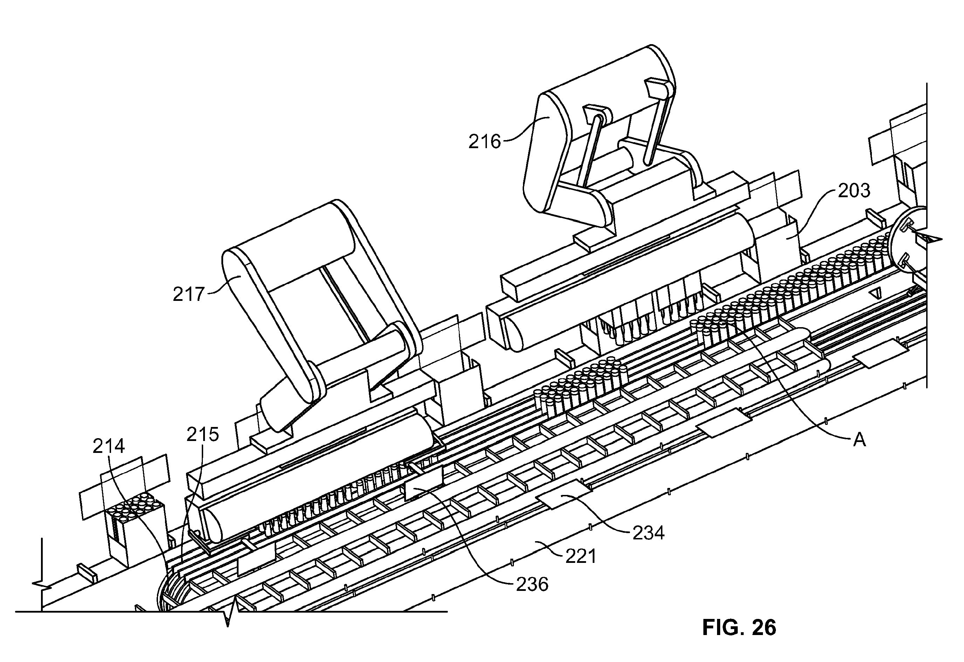

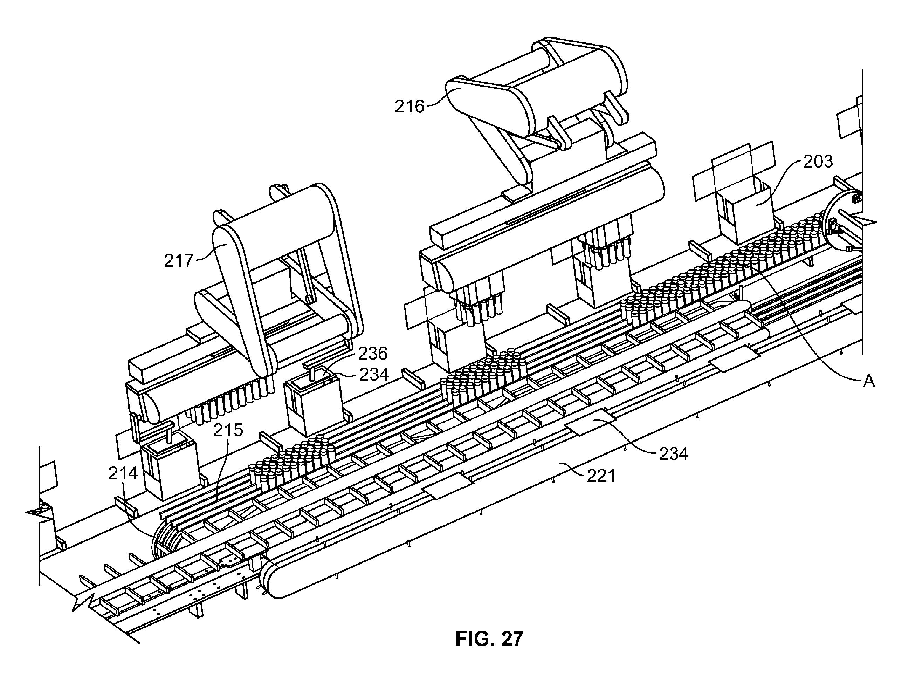

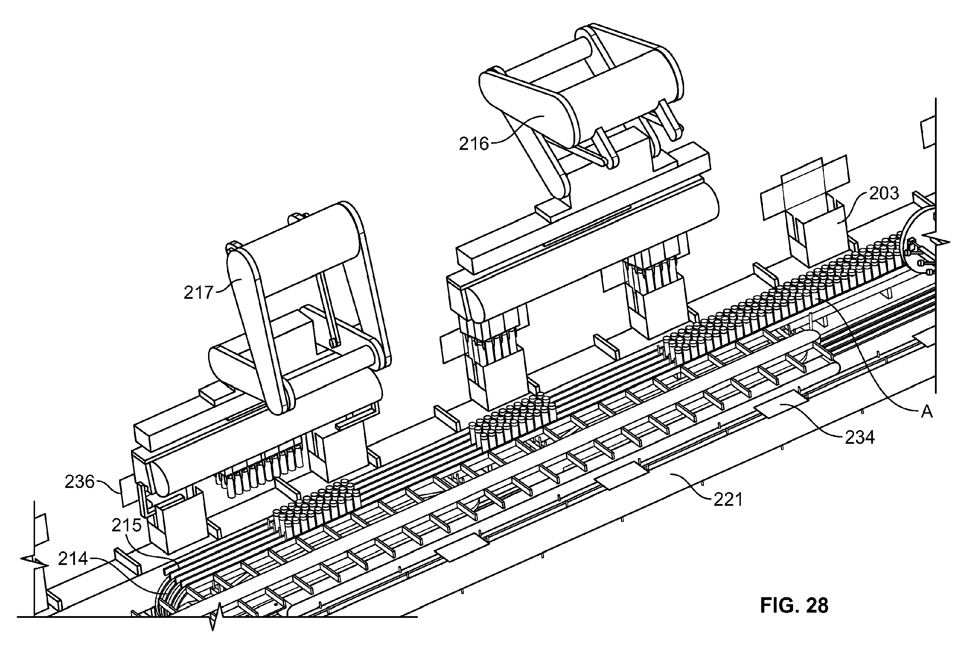

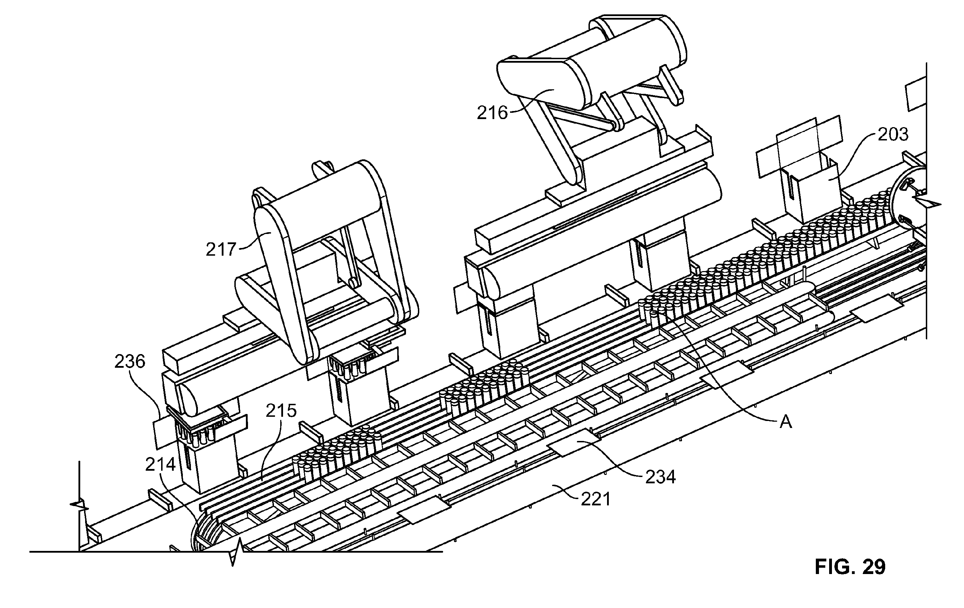

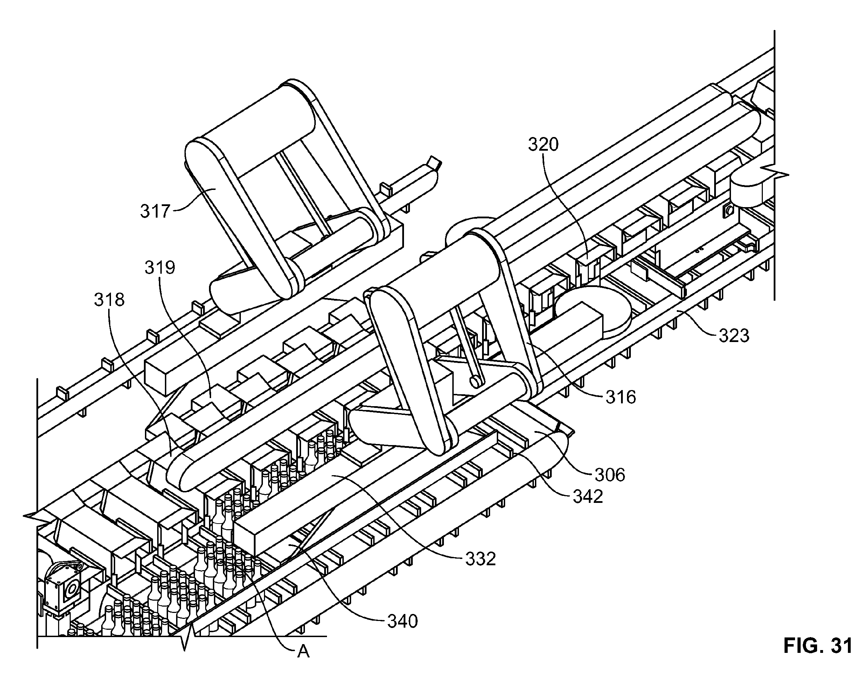

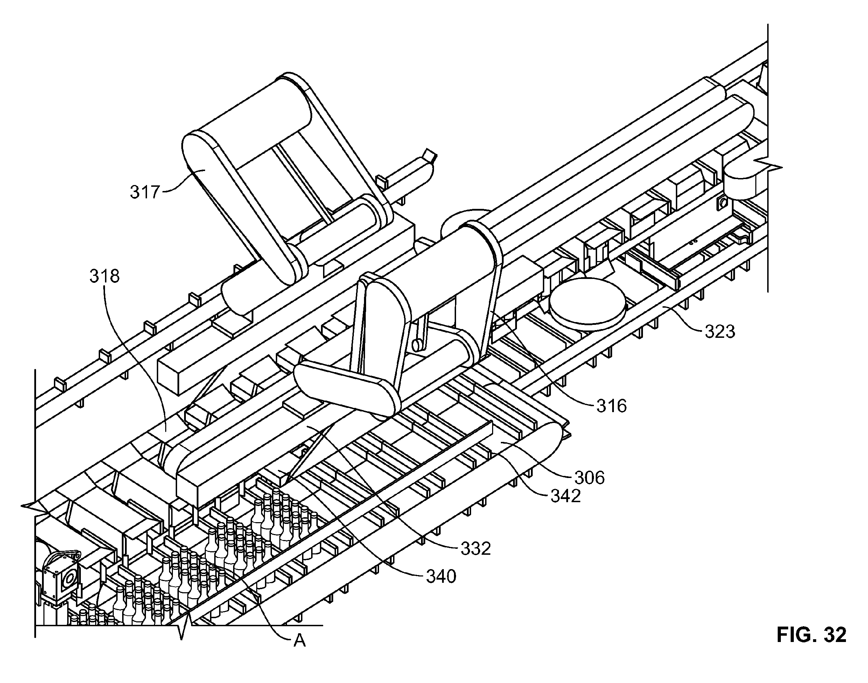

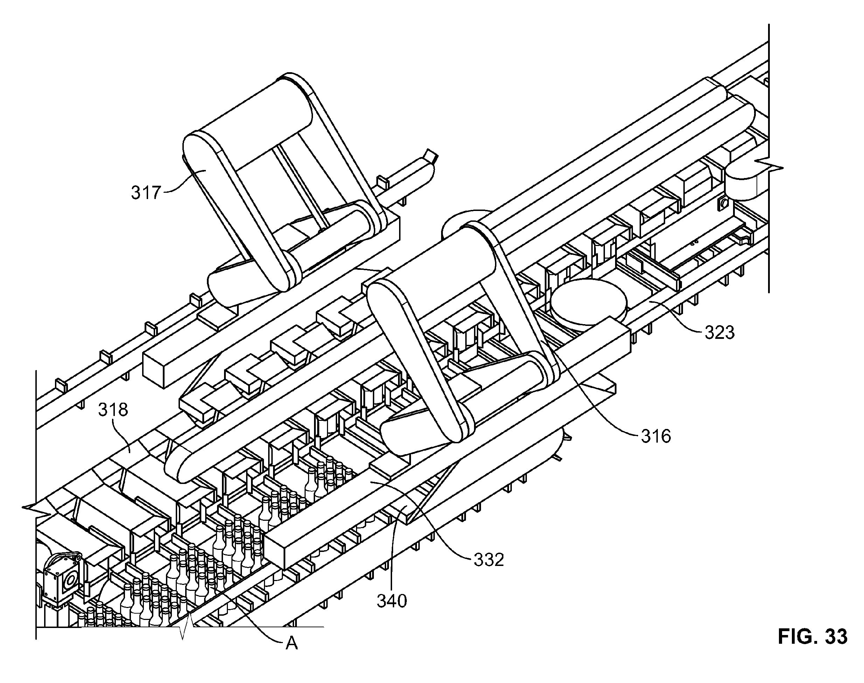

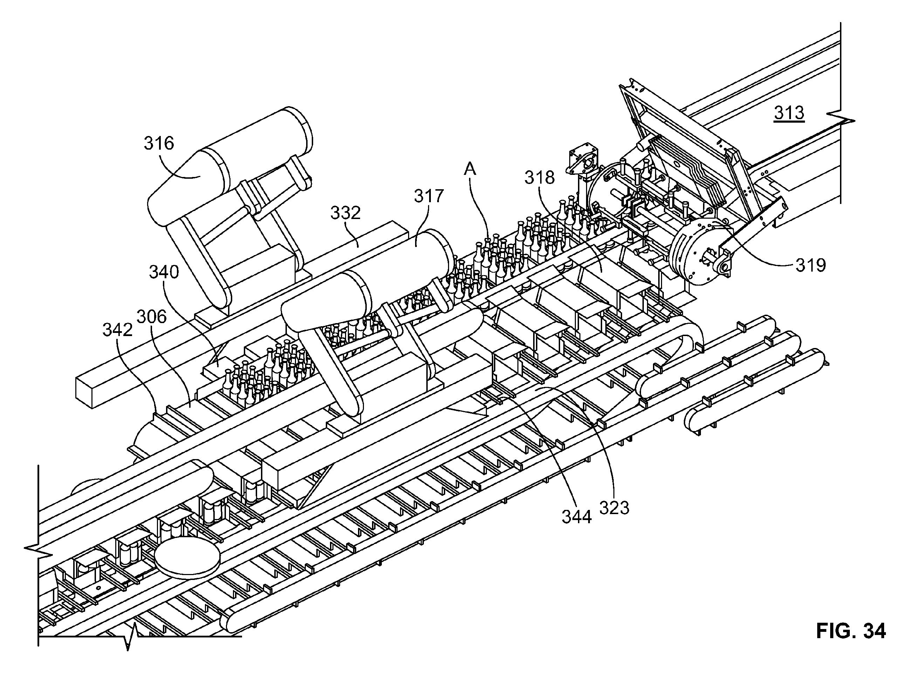

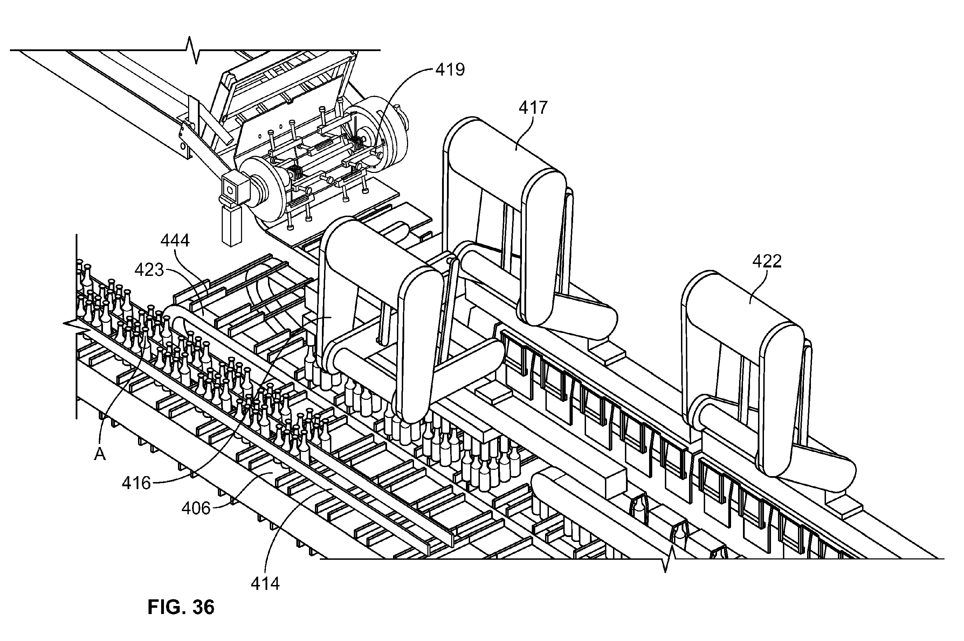

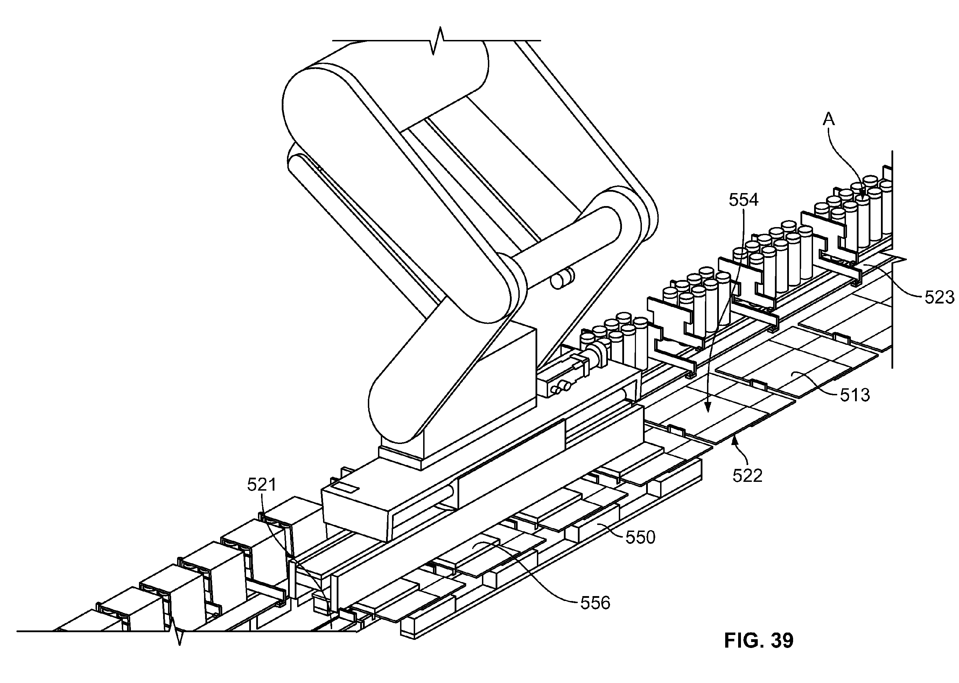

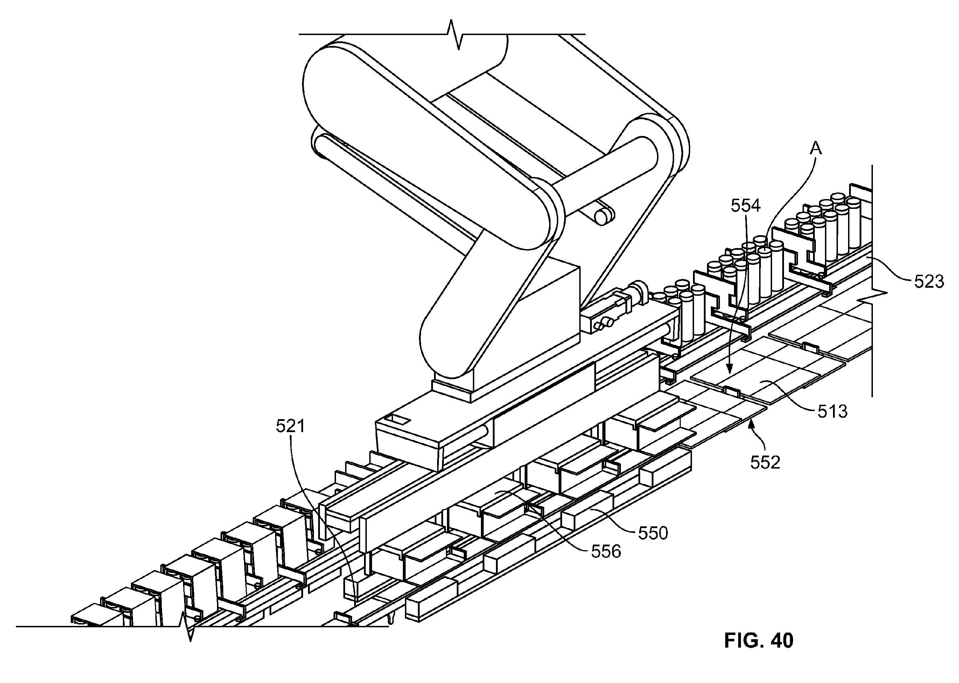

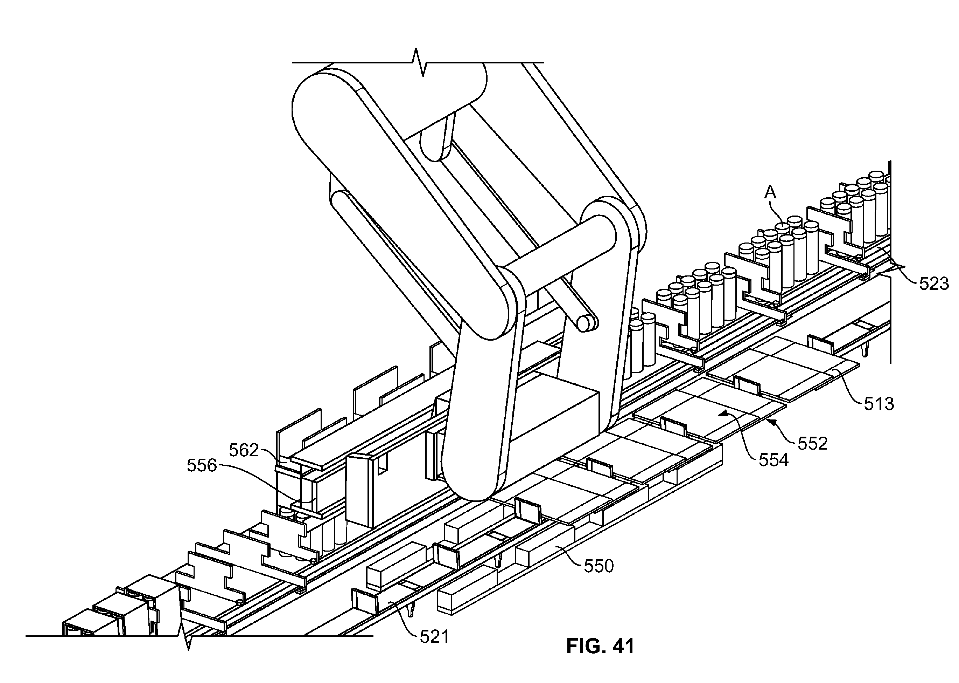

The sliding tools 900, 1000 described above are shown implemented in a number of systems, which are shown in the Figures 11 to 42.

There is shown in Figure 11 a packaging system 1, for packaging articles into cartons. For the purposes of the following description, both articles and cartons are considered to fall within the generic term items.

The packaging system 1 comprises an article conveyor 6, disposed upon which is a stream 7 of articles A. In the exemplary embodiment, two rows of articles A form the stream 7, although it is contemplated that any number of rows may be accommodated without departing from the scope of the inventions set out by the accompanying claims, by adjusting the width of the article conveyor 6 upon which they are disposed.

A lane splitter 12 is provided to optionally alter the number of rows of articles A in the stream 7. For example, where articles A are initially disposed in three rows, and where subsequent operation of the system 1 requires 3 or 4 rows, the lane splitter 12 is operable to manipulate the articles A in the stream 7 so as to form the stream 7 into a corresponding 3 or 4 row configuration. This is achieved by controlling the lane splitter 12 to bring it into contact with a selection of articles A of the stream of articles 7, and to engage therewith. Once so engaged, the lane splitter is further operable to displace those articles A, with which it is so engaged, transversely of the direction of motion of the stream of articles 7. A control unit is necessary to ensure that the lane splitter maintains a substantially equal number of articles in each resulting row, so that the overall through put is maximised. If, for example, one of the two initial rows of the stream of articles 7 is split to form a third row of a desired three row output stream 7, then the overall output could not exceed half the throughput of the initial stream 7. However, by selecting an even number of articles from, in this example, both of the two initial rows of the stream 7, the overall throughput may reach two thirds that of the initial stream 7.

If the article conveyor 6 is wide enough to accommodate the widened stream of articles 7, then the lane splitter 12 may simply displace the selected articles A proximate the sides of the article conveyor 6. If, however, the article conveyor 6 is too narrow, then an additional conveyor is provided to convey the displaced articles A. It is envisaged that each row of the articles A in the stream of articles 7 may be separated from the articles in the adjacent row by a low wall to maintain alignment of the articles in each row. If this is the case, it may be necessary for the lane splitter 12 to lift the selected articles A up and over this low wall before it deposits them in the aforementioned displaced position. The low walls may, alternatively, be positioned a little downstream of the lane splitter, so that this lifting step becomes unnecessary, and the selected articles then pass between the low walls only after they have been suitably displaced.

The displacement of the articles A of the stream of articles 7 does not affect the velocity of the articles A. Therefore, as articles are selected from the stream 7 and displaced, there are created gaps in the stream 7 and spaced groups of articles A. It is therefore necessary for some form of velocity retardation means (not shown) to be employed so as to allow any resulting gaps in each row to close up. This may be effected by, for example, passing the stream 7 from a first article conveyor 6 onto a second article conveyor (not shown); this second article conveyor could operate at a lower speed to the first, and thereby retard the articles A of the stream 7 relative to those articles that are still conveyed upon the first article conveyor 6. Once the gaps in each row have closed, the stream 7 is ready for subsequent operations as described below.

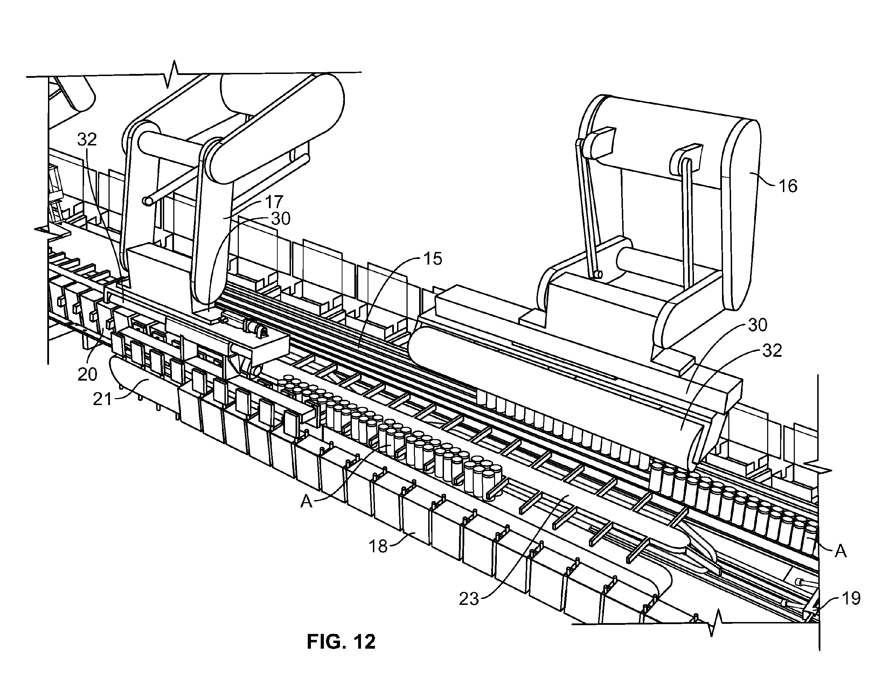

Figures 11 to 14 show the system 1 of Figure 1 from the opposite side, and focuses on the operations carried out upon the articles A after they have been manipulated by the lane splitter 12. In the exemplary embodiment of Figure 12, the lane splitter has not been used to generate additional rows because the desired output configuration of the system requires arrays of 2x3.

A second tool 16 is provided, and is positioned such that the stream of articles 7, once manipulated by the lane splitter 12, passes within the working reach thereof. The second tool 16 terminates in a sliding head 32, which corresponds to that described above. The second tool 16 is controllably articulated such that the head 32 thereof may be brought down into engagement with a selection of articles A, which articles are then engaged by the head 32 before being transferred by the second tool 16 onto a third conveyor 23.

As the stream of articles 7 is in continuous motion whilst the articles A are being engaged by the head 32 of the second tool 16, it is necessary to control that head 32 so as to synchronise the motion thereof with the motion of those articles A that the head 32 is to engage. The head 32 is thus controlled so as to move it in an upstream direction relative to the flow of articles such that it may then be accelerated in the direction of flow of the articles A in order to reach the same velocity as the article that the head 32 is to engage. Once the velocity of the head 32 is matched with that of the articles A that it is to engage, the engagement is effected using some means known in the art such as vacuum seals or mechanical grippers. The articles are then transferred out of the stream of articles 7 by the second tool 16 and disposed upon the third conveyor. Once the tool lifts the selected articles A out of the stream 7, the head 32 of the second tool 16 is controlled to move back to its original upstream position, thereby retarding the speed of those articles A in comparison to the remainder of the stream 7. This movement is performed in no longer than the time required for the second tool to bring the selected articles A into position over the third conveyor 23. Before the articles A can be released by the head 32, it is necessary for the head 32 to be accelerated in the direction of motion of the third conveyor 23 such that the articles and the third conveyor 23 have matching velocities. Once this is achieved, the second tool 16 is controlled to lower the selected articles A down onto the surface of the third conveyor 23 and the head then controlled to release those articles. The second tool 16 is then controlled to move the head 32 away from the deposited articles, and to return to its original position over the stream of articles 7, with the head 32 returned to its upstream position, in readiness to match the velocity of, and engage with, a subsequent selection of articles from the stream 7.

This arrangement is advantageous in that the reciprocal movement of the sliding head 32 of the second tool 16 allows the articles from the stream 7 to be transferred substantially transversely of the direction of motion of that stream 7, directly onto the third conveyor 23, whilst also benefitting from the velocity-matching capabilities of the tool 16. This leads to minimisation of the space required by the conveyor arrangement, and therefore the overall footprint of the system.

The articles A that have been deposited upon the third conveyor 23 are conveyed by that third conveyor 23. In the exemplary embodiment, the third conveyor 23 is parallel with the article conveyor 6 and conveys the articles at substantially the same velocity. This is not necessarily the case however, as the head 32 could optionally be rotationally mounted on the end of the second tool 16 so as to accommodate non-parallel conveyors, and the speed of the third conveyor 23 could optionally be different to that of the article conveyor 6.

Using the second tool 16, successive groups of articles A are transferred from the article conveyor 6, onto the third conveyor 23. As required, the articles A that are engaged by the head 32 may also be separated into a number of spaced groups. Thus, as the articles A deposited upon the third conveyor 23, they are optionally disposed in spaced groups by controlling the head in the manner described above. For example, the illustrated embodiments show the second tool 16 selecting 24 rows of articles A (with two articles in each row) from the stream of articles 7, and forming those articles into eight spaced groups of three rows each.

The second tool 16 is controlled so as to position each of the spaced groups of articles between successive lugs of the third conveyor 23, which lugs act as separators and, optionally, as the primary means of conveyance through abutment with the downstream sides of the rearmost articles of each group.

A primary carton conveyor 21 is provided proximate the third conveyor 23. The primary carton conveyor accepts a variety of formats of cartons from a synchronised feeder 19 positioned at an upstream end thereof. The feeder 19 selects successive carton blanks 13 from a magazine 11. In the illustrated embodiment, the blanks are for forming cartons 18 that are to be positioned over the tops of the grouped articles. The blanks 13 for forming these cartons 18 are positioned upon the third conveyor 23, and are folded to at least partially erect the carton 18 by some means known in the art, such as guide slots (not shown) that gather the leading edges of panels of the blank that are to form the side panels of the carton 18, and which guide those panels downwards, thereby causing them to fold about predetermined fold lines hinging them to the top panel of the carton. Lugs are positioned along the length of the surface of the third conveyor 23, which lugs abut the rearward edges of the cartons 18.

The cartons 18 disposed upon the primary carton conveyor 21, and the articles A disposed upon the third conveyor 23 are conveyed substantially side-by-side in synchronicity with one another, into the working reach of a third tool 17. This third tool 17 too has a sliding head 32 as described above. This sliding head 32 is controlled so as to be positioned in an upstream position as the cartons 18 pass beneath it, and then to accelerate to match the velocity of those cartons 18 such that it can be brought down into engagement therewith. Once a group of cartons is engaged, the third tool 17 lifts the sliding head upward, to clear the side panels of the cartons 18, off the primary conveyor 21, and to bring those selected cartons into position over a corresponding number of groups of articles A disposed upon the third conveyor 23. As this is taking place, the sliding head 32 of the third tool 17 is controlled so as to return to an upstream position. Thus, by the time the sliding head 32 of the third tool 17 becomes positioned over the articles A on the third conveyor 23, it can accelerate in the direction of motion of those articles so as to match the velocity thereof, and the "U"-shaped carton 18 conveyed by the third tool 17 may be deposited upon those articles A with substantially no speed differential therebetween.

Thus spaced groups of articles are created, with each group being covered by a "U"-shaped carton 18. As the packaged articles continue along the third conveyor 23, some means known in the art, such as guide slots, may fold both panels of the carton 18, upwardly beneath the articles A, to complete the erection of the carton, and to seal the articles within the carton 18.

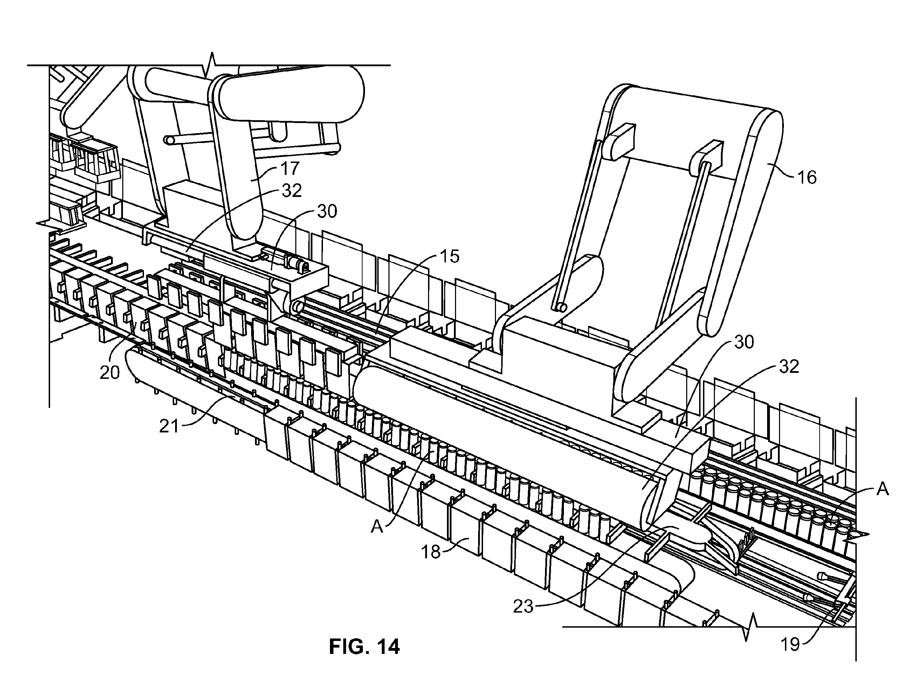

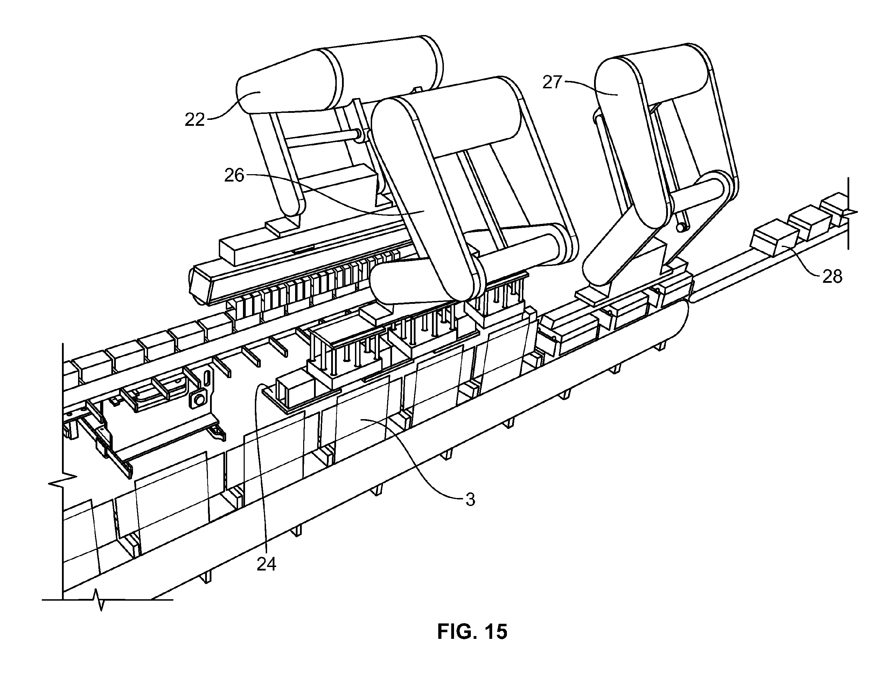

A fourth tool 22 is positioned over the third conveyor 23 to selectively engage with the packages 20 (best shown in Figure 14) of articles A in their fully erected cartons 18, and to transfer those selected packages 20 from the moving third conveyor 23 to an intermediate stacking surface 24, as best shown in Figures 15 to 19. This fourth tool 22 also has a sliding head 32 as described above, and the operation thereof is controlled in the same manner as for the first and second tools 16, 17 so as to allow the sliding head 32 to engage with the desired packages 20 as those packages are moving along the third conveyor 23. Once the desired selection of packages has been engaged by the fourth tool 22, they are transferred by the fourth tool 22 to the intermediate stacking station 24 and released thereupon.

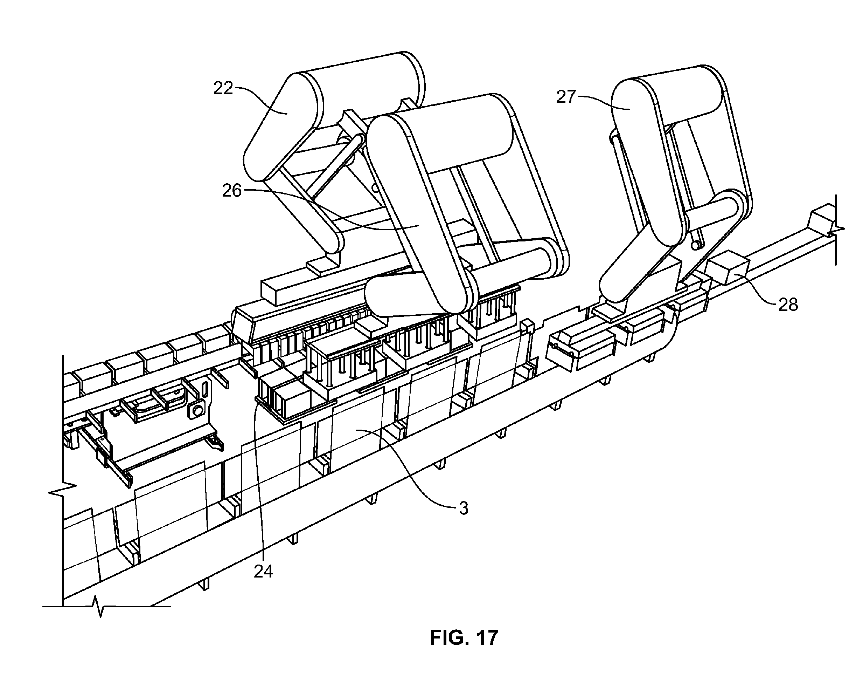

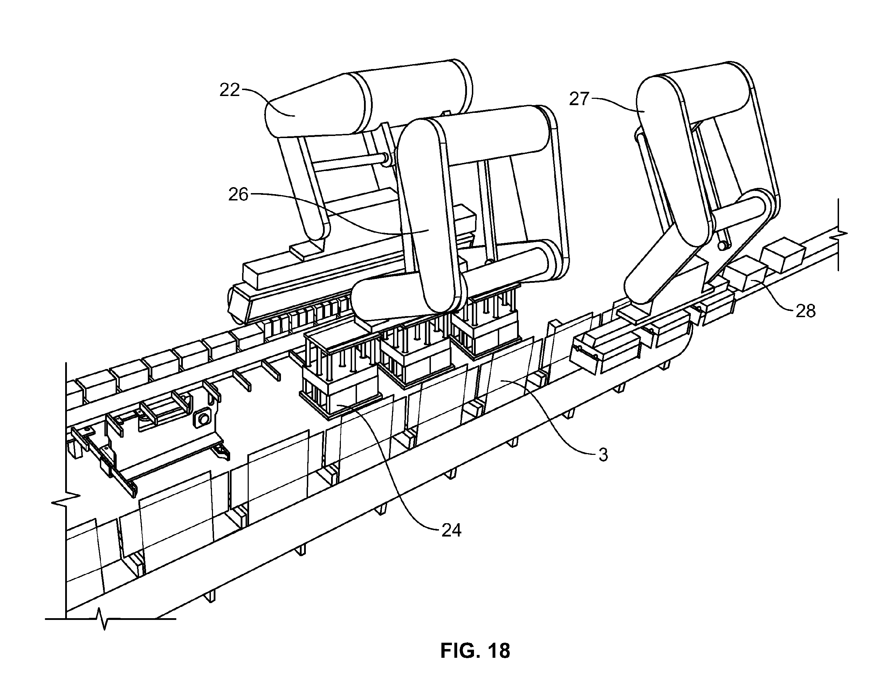

The intermediate stacking station 24 may take the form of a platform or other stationary surface that is capable of supporting the packages whilst they are stacked one upon another by the third tool 22. In the illustrated embodiment the third tool 22 engages three packages 20 at a time, from the third conveyor 23, and transfers them to adjacent locations on the intermediate stacking station 24. The third conveyor 23 is in continuous motion as this occurs and the sliding head 32 is controlled to match the velocity of the packages as engagement therewith is effected. Once the aforementioned three packages 20 have been deposited upon the intermediate stacking station 24 the third tool 22 returns to the third conveyor 23 to select an additional three packages 20. These additional three packages are then transferred to the intermediate stacking station 24 and positioned in substantially face contacting relationship with the three packages 20 previously deposited thereon. This serves to create three groups of spaced packages, each group comprising two packages one in front of the other, as is best shown in Figures 17 and 18.

A fifth tool 26 is provided that may then engage with the groups of packages that are disposed upon the intermediate stacking station 24 and transfer them into tertiary packaging 3. The tertiary packaging 3 is provided by a tertiary packaging conveyor 8. The tertiary packaging 3 is fed to an upstream point of the tertiary packaging conveyor 8 by a first tool 10 (best shown in Figure 11) that engages successive tertiary packaging blanks 2 from a magazine 4 and that partially erects those tertiary packaging blanks 2 into tertiary packages 3 before depositing them onto the tertiary packaging conveyor 8. The tertiary packaging tool 10 is preferably an articulated overhead tool that is capable of engaging with a tertiary packaging blank 2 from the magazine 4, and withdrawing it therefrom before using, for example, a packaging former 5 to partially erect the tertiary packages 3 from the tertiary packaging blank 2. The packaging former 5 may comprise, for example, four upright walls joined one to the next, sized so as to substantially match the shape of the perimeter of a bottom panel of the tertiary packages 3. When this bottom panel is pushed through an aperture formed between these upright walls, any side and/or end panels of the tertiary package 3 will be caused to fold upwards at right angles to the bottom panel, and hence into partially erected condition. Naturally, any panel of the tertiary packages may be pushed into the package former 5, and it may, therefore, be the top and bottom panels of the tertiary packages that become folded upwardly. In this case it may be necessary that the first tool 10 rotates the tertiary packages before depositing them upon the tertiary packaging conveyor 8, so as to ensure that the desired panel of the tertiary package 3 is lowermost.

The tertiary packaging conveyor 8 is controlled to convey tertiary packages to within the working reach of the fifth tool 26, and there to stop so as to allow groups of packages 20 to be deposited therein. In the illustrated embodiment, the tertiary packages 3 are conveyed to positions that align with the resting positions of the groups of packages 20 on the intermediate stacking station 24. The fifth tool 26 therefore need only engage the group of packages 20 and transfer them directly across and down into the tertiary packages 3, at which time the groups are released and the fourth tool returns to the intermediate stacking station 24.

Due to the fact that the tertiary packaging conveyor 8 is controlled to stop to allow the group of packages 20 to be deposited thereon, it is not necessary for the fourth tool 26 to be fitted with a sliding head 32 as described above. However, it is envisaged that the system 1 could be modified so as to maintain the packages in continuous motion as the groups of packages 20 are deposited thereon, and in this case a sliding head such as that described above would need to be employed to allow the groups of packaged articles 20 to be synchronised with the motion of the packages as they are deposited therein.

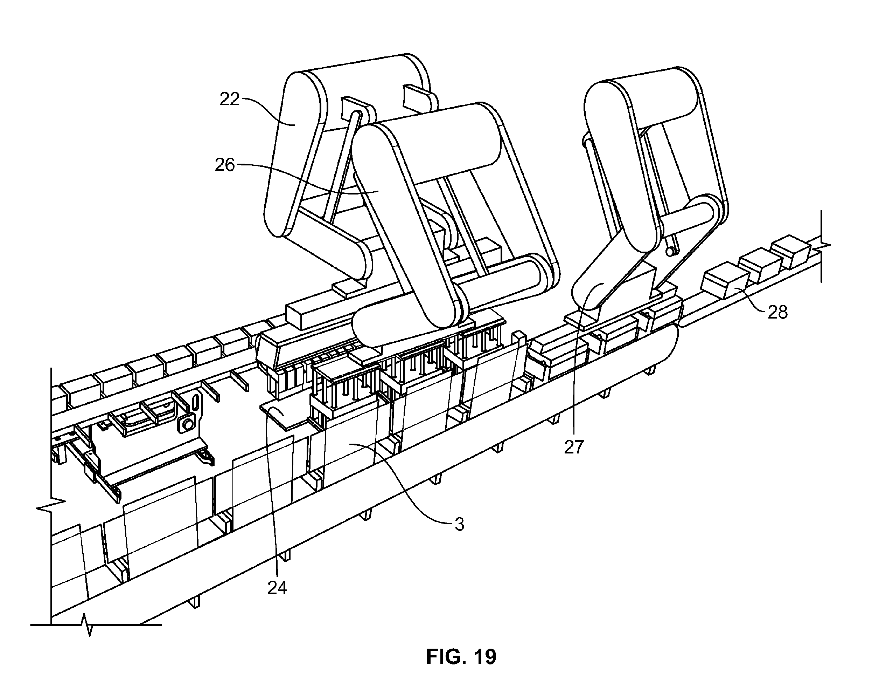

The operation of the fifth tool 26 is synchronised with that of the tertiary packaging conveyor 8 such that the groups of packages 20 are deposited in the tertiary packages 3 and the fourth tool 26 fully removed from the tertiary packages 3 before the tertiary packaging conveyor 8 begins convey the tertiary packages 3 onwards beyond the fourth tool 26 and into the working reach of sixth tool 27 as shown in Figure 19.

The purpose of the sixth tool 17 is to fold down a lid panel of the tertiary packages 3 and to secure that panel in a closed position once the tertiary package 3 has been loaded with groups of packages 20. The head of the sixth tool 27 is operable to fold down, where appropriate, securing panels hinged to the aforementioned lid panel, into face contacting relationship with the respective side and end panels of the tertiary package. The head of the sixth tool may comprise side and end flaps that extend downwardly from the level of a top surface of the head. When the head of the sixth tool 27 is brought laterally over the tertiary package, a frontmost edge of the end flap of the head will first come into contact with the lid panel of the tertiary package 3 proximate the fold line hinging that lid panel to a side wall of the tertiary package 3, as the head continues to move, the lid panel will be folded down toward the tertiary package 3 until it reaches a desired orientation closing the tertiary package 3. Once the front flap of the head has passed beyond the leading edge of the lid panel, the head is then brought downward toward the lid panel. The lowermost edge of the front flap causes a front securing panel hinged to the lid panel to be folded downwardly into abutment with a side wall of the tertiary package. In this position some means known in the art may be used to secure the front securing panel in position relative to this side panel of the tertiary package 3. Where provided, side securing panels hinged to opposing side edges of the lid panel will be folded down into abutment with opposing side walls of the tertiary package 3 as the head is lowered to towards the lid panel, by vertically depending side flaps of the head.

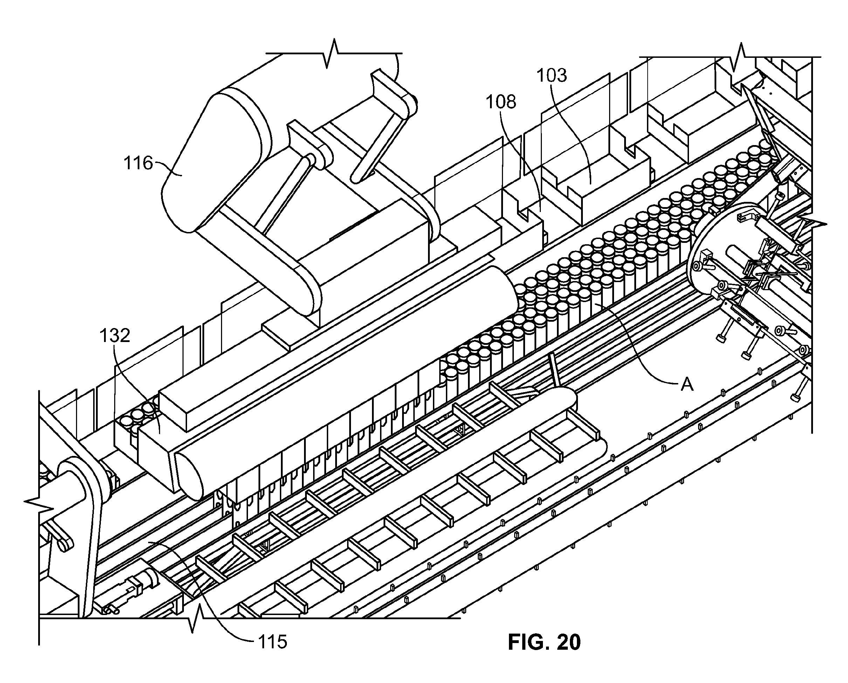

The system 1 described above allows a large degree of flexibility in that it can easily be reconfigured to accept different formats of articles, carton and tertiary packaging. This is exemplified in Figures 20 to 22 where it is shown that the articles may be put directly into cartons disposed on what was previously described as the tertiary packaging conveyor 8. The same element numbering as in the above description has been used to aid comparison, with reference numerals being prefixed by a "1" to indicate this second embodiment. The Figures show second tool 116 being used to select articles A from the stream of articles 107, as in the above description, and transferring those selected articles A out of the stream 107 and into carton 103 conveyed upon the tertiary packaging conveyor 8. In this illustrated alternative embodiment, the stream of articles 107 comprises four adjacent lanes of articles and the second tool 116 selects six rows of articles simultaneously with each of three gripper elements thereof. Thus three 4 x 6 arrays of articles are selected from the stream of articles 107 simultaneously and are transferred into three cartons 103 by the second tool 116. The sliding head 132 of the second tool 116 allows these articles A to be engaged and transferred out of the stream of articles 107 whilst that stream 107 is in continuous motion. The cartons 103 may or may not be halted by the tertiary packaging conveyor 108 as the articles are loaded, whilst flexibility is offered by the sliding head 132 of the second tool 116. The loaded carton 103 may then be conveyed, by the tertiary packaging conveyor 108, onward to, for example, the sixth tool described above (not shown) for the lid to be secured in a closed position.

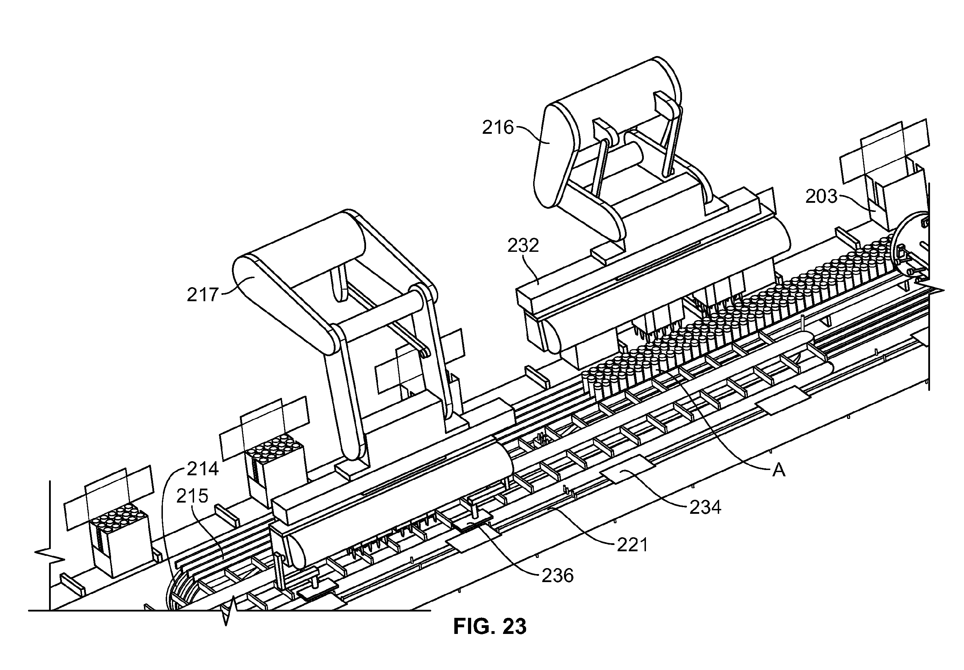

A third embodiment of the system 1 described above is illustrated in Figures 23 to 29, wherein a tier of articles is transferred directly into the cartons on the tertiary packaging conveyor, as in the second embodiment, on top of which tier a separator panel is then placed, before a subsequent tier of articles is then stacked on top of the separator panel. The same element numbering as in the above description has been used to aid comparison, with reference numerals being prefixed by a "2" to indicate this third embodiment. In this third embodiment, however, the third tool 217 is used, in addition to the second tool 216, to select groups of articles A from the stream of articles 207 and to transfer them into cartons 203 disposed upon the tertiary packaging conveyor 208. The sliding head 232 of the third tool 217 is additionally fitted with rotatable grippers 236. The third tool 217 is controllable to move the head 232 thereof over the carton conveyor 221, at which point the rotatable grippers 236 are lowered and brought down into contact with separator panels 234 that are disposed upon the carton conveyor 221. The sliding head of the third tool 217 allows the rotatable grippers 236 to move synchronously with the separator panels 234 in the manner described above, and thereby to engage with them whilst they are in motion upon the carton conveyor 221. Once engaged by the rotatable gripper 236, the separator panels are lifted off the carton conveyor 221 by the third tool 217. The third tool 217 is then positioned over the article conveyor 206, and the rotatable grippers are rotated 90 degrees about a longitudinal axis of the head 232. The third tool 217 then lowers the head 232 down onto the articles A of the article stream such that the primary grippers of the head 232 can engage a selection of articles A from the stream of articles 207. The fact that the rotatable grippers 236 have been so rotated ensures that neither they, nor the separator panels 234, obstruct the motion of the head 232 by fouling the article conveyor 206, or any other element of the system. Once engagement between the primary grippers of the head 232 and the selected articles A has been achieved, those selected articles A are transferred off the article conveyor 206 and the third tool 217 is brought to a position above the tertiary package conveyor 208. As the head 232 is moved away from the article conveyor 206, the rotatable grippers 236 are rotated downwardly 90 degrees so as to point substantially vertically downward from the head 232. Alternatively, the third tool 217 could pick up the aforementioned selection of articles A from the article conveyor 206 before then engaging the separator panels 234 from the carton conveyor 224, then to move to the tertiary packaging conveyor 208.

The tertiary packaging conveyor 208 is halted when a carton 203 is disposed beneath each of the two rotatable grippers 236 of the third tool 217. The motion of the second tool 216 is controlled such that this point in time coincides with the loading of a first tier of articles A into the cartons 203 upstream of the direction of motion of the cartons 203 on the tertiary packaging conveyor 208, by the second tool 216. The head 232 of the third tool 217 is lowered until the separator panels 234 engaged by the rotatable grippers 236 are positioned within the cartons 203, on top of the aforementioned first tier articles. Once correctly positioned, the separator panels 234 are released by the rotatable grippers 236, and the head 232 is raised so as to remove the ends of the rotatable grippers 236 from the cartons 203. The rotatable grippers 236 are then rotated 90 degrees upwardly about the longitudinal axis of the head 232. The primary grippers are then slid away from one another along the length of the head 232 until they are each correctly positioned above the carton 203 in which the separator panels 234 have been deposited. The head 232 is then lowered once again, and the selected articles A, engaged by each of the primary grippers, are lowered into the respective cartons 203 onto the separator panels 234. The articles A are then released and the head 232 withdrawn from the carton 203.

The cartons 203 may or may not halt as the separator panel 234 and subsequent upper tier of articles are deposited within the carton 203. If the tertiary conveyor 208 is not halted, the sliding head 232 of the third tool 217 can be used to match the velocity of the cartons 203 as the separator panel 234 and articles A are so deposited.

Once loaded with the two tiers of articles, the cartons 203 are conveyed onward to, for example, a sixth tool such as that described above, for closing a lid of the cartons 203.

Although there is described above an exemplary embodiment in which two tiers of articles are loaded into each carton, it is envisaged that more tiers could be provided. This could be achieved either by providing an additional tool identical to the third tool 217, disposed further downstream of the motion of the cartons 203 on the tertiary packaging conveyor 208. Alternatively, the cartons 203 could be held at rest for an extended period on the tertiary packaging conveyor 208 as the third tool 217 returns to the carton conveyor 221 to engage additional separator panels 234 and then to the article conveyor 206 to engage additional selection of articles A to form a further tier in the carton 203.

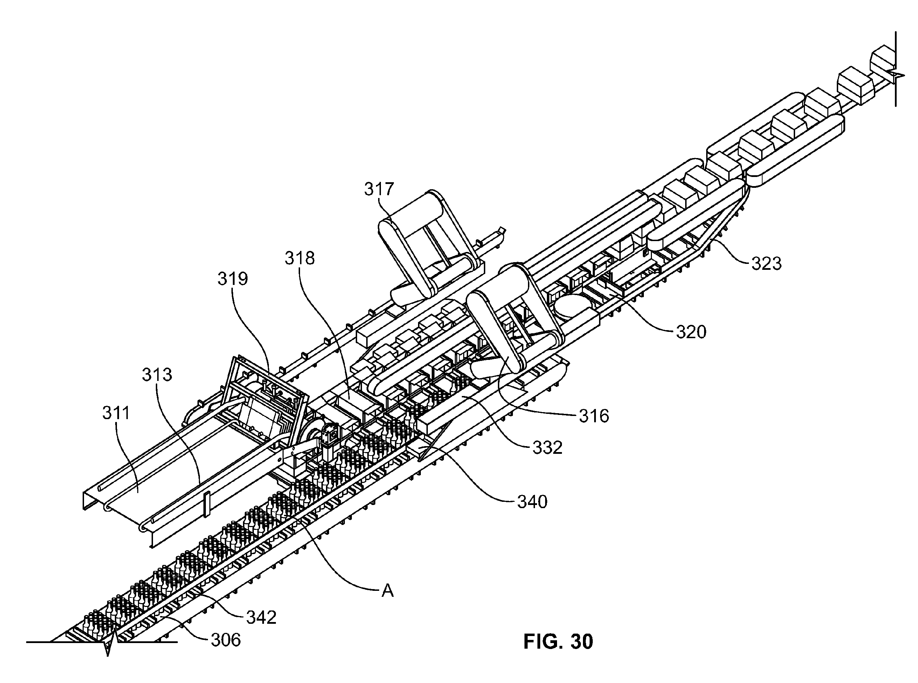

A fourth embodiment of a system using the sliding heads 32 described above is shown in Figures 30 to 34. The same element numbering as in the above description has been used to aid comparison, with reference numerals being prefixed by a "3" to indicate this fourth embodiment. Tubular cartons in a flat collapsed condition 313 are fed from magazine 311 by rotating suction arms 319 onto third conveyor 323. As the cartons 318 are passed onto the third conveyor 323 they are erected to an at least partially set up condition, and spaced from one another on the third conveyor 323 by spacer bars 344. The open ends of the cartons are orientated transversely of their direction of movement upon the third conveyor 323.

The article conveyor 306 is positioned parallel with and adjacent to the third conveyor 323, and the second tool 316 is positioned adjacent the article conveyor 306 with a sliding head 332 that has, fitted to a side thereof, a number of prongs 340. The articles A are arranged on the article conveyor 306 in spaced groups, between spaced bars 342. The pitch between the spaced groups of articles A on the article conveyor 306 is identical to that of the pitch between the erected cartons 318 on the third conveyor 323. By synchronising the article conveyor 306 and the third conveyor 323, each group of articles is aligned with an opening formed in a proximate end of a carton 318 on the third conveyor 323.

Starting from a position in which the sliding heads are extended in the upstream direction of the flow of the stream of articles 307, the sliding head is accelerated in the downstream direction of the stream 307 until the velocity of the prongs 340 of the head 332 matches a selection of articles A from the stream of articles 307 disposed upon the article conveyor 306. Once the velocity of the prongs 340 and the selected articles A is matched, the second tool 316 moves the sliding heads 332 inwardly toward the third conveyor 323, in so doing bringing each of the prongs 340 into contact with one or more articles A from the stream of articles 307. The second tool 316 continues to move its head 332 inwardly, and thus begins to push those articles A, with which the prongs of the head 332 are in contact, off a side edge of the article conveyor 306.

Due to the close proximity of the article conveyor 306 and the third conveyor 323, and the alignment between the groups of articles A with the open ends of the carton 318, the articles A that are pushed off the side edge of the article conveyor 306 become inserted into the carton 318 with which they are aligned. The second tool 316 is controlled so as to continue to insert the articles A into the corresponding carton 318 until they are fully inserted therein. Whilst this is taking place the sliding head 332 of the second tool 316 matches the velocity of the cartons 318 so that the presence of each prong 340 inside a portion of the cartons 318 does not interfere with the movement of those cartons 318 upon the third conveyor 323.

Once a group of articles has been fully inserted into a carton 318, the second tool 316 withdraws the head 332 away from the carton 318, thereby withdrawing the prongs 340 on the head 332 from the carton 318. This process is finished before the head 332 reaches its full extension in the downstream direction of the flow of the stream of articles 307, so that the velocity of the prongs in the direction of the flow of the cartons 318 matches that of the cartons 318 at least until the prongs 340 have been fully withdrawn. Once so withdrawn, the head 332 is returned to its original position extended in an upstream direction of the flow of the stream of articles 307. Once this position is reached, the above process is repeated so that subsequent groups of articles on the article conveyor 306 can be loaded into selected cartons 318.

Preferably, the third tool 317 is also used in the above process, and is also fitted with a sliding head 332 according to the above description, fitted with prongs 340. The third tool 317 is controlled so as to insert prongs 340 into the opposite ends of the carton 318 as the above process of loading those cartons 318 with articles A is being carried out. The purpose of this is to provide a buffer, using the prongs of the third tool 317, that prevents articles A that have been loaded into the carton 318 through one end thereof from falling out through the opposing end. As with second tool 316, the motion of the head 332 of the third tool 317 is synchronised with the motion of the cartons 318 into which the prongs 340 thereof are inserted, so as to avoid interference with the motion of those cartons 318 upon the third conveyor 323.

Once the articles A have been successfully loaded into a given carton 318, and the second tool 316 begins to withdraw the prongs thereof from within that carton, the third tool 317 also withdraws the prongs thereof from the opposing end of that carton 318. Once fully withdrawn, the head 332 of the third tool 317 is returned to a starting position in which it is extended toward the upstream direction to the flow of cartons 318 upon the third conveyor 323.

The ends of the loaded cartons 318 on the third conveyor 323 are then closed by some means known in the art, such as by folding end closure flaps into the plane of the end of the carton and securing them one to the other, thereby closing that end of the carton 318. The carton is then passed onward to either subsequent packaging operations, or to an outfeed of the system.

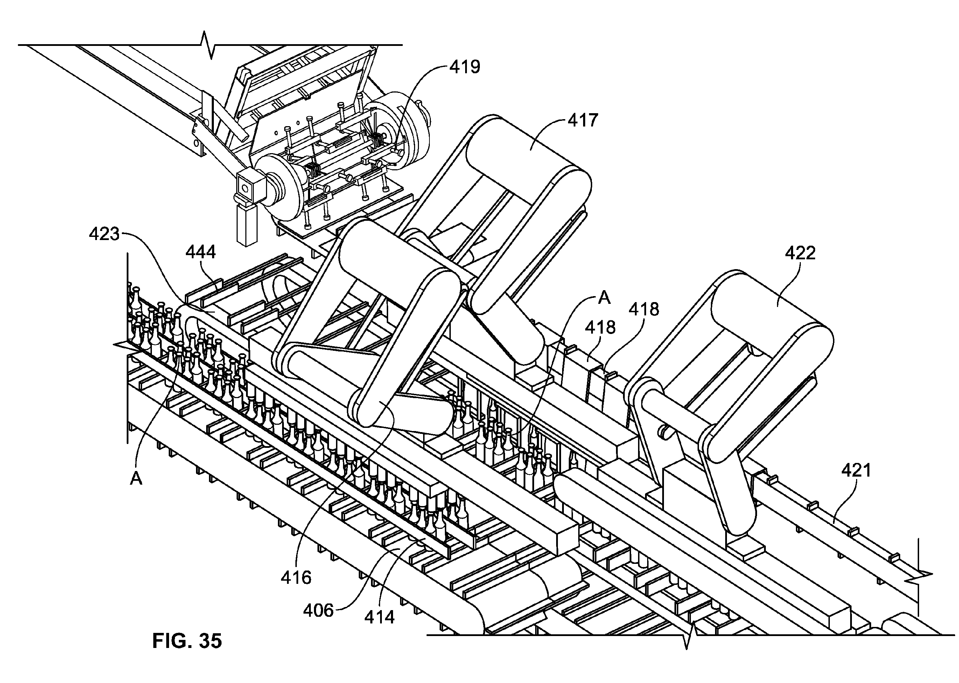

A fifth embodiment of a system using the sliding head described above is shown in Figures 35 to 37. The same element numbering as in the above description has been used to aid comparison, with reference numerals being prefixed by a "4" to indicate this fifth embodiment. In this embodiment of the system, the article conveyor 406 is disposed adjacent to and parallel with the third conveyor 423. The second tool 416 is positioned within reach of the article conveyor 406 and the third conveyor 423 such that it may be controlled so as to engage with selected articles A from the stream of articles 407, and then transfer those engaged articles A to the third conveyor 423. The second tool 416 is fitted with a sliding head 432 as described above, which sliding head is initially extended in an upstream direction of the flow of the stream of articles 407. The head 432 is then accelerated in the direction of the flow of the stream of articles 407 until it matches the velocity of the articles to be selected, at which point the primary grippers of the head 432 are brought down into contact with the selected articles A of the stream, and form an engagement therewith. The selected articles are lifted off the article conveyor 406 by the second tool 416, which may require substantially vertical displacement at first, if the article conveyor comprises upright walls 414 separating adjacent rows of articles of the stream. Once the selected articles are clear of the article conveyor 406, the head of the second tool 416 is brought across over to the third conveyor 423, and in so doing the head 432 returns to its initial position extending in the upstream direction of the motion of the third conveyor 423. Once the head 432 reaches the third conveyor 423, the head 432 thereof is accelerated in the downstream direction of the flow the third conveyor 423 until the velocity of the head matches that of the third conveyor 423. The articles are then lowered down onto the surface of the third conveyor 423 in between spacer bars 444.

The third tool 417 is positioned within reach of the carton conveyor 421 and the third conveyor 423. The third tool 417 is fitted with a sliding head 432 as described above so that cartons 418 may be picked off the carton conveyor 421 whilst they are in motion, and placed on top of selected articles on the third conveyor 423.

The cartons 418 are fed to the carton conveyor 421 by rotating suction arms 419 that engage with successive carton blanks 412 held in magazine 411. In the illustrated embodiment, the cartons 418 are wraparound cartons comprising a top panel and opposed side panels hinged thereto. A bottom closure arrangement is hinged to one or both side panels opposite the top panel. The carton blanks 413 are disposed upon the carton conveyor 421 by the rotating suction arms 419, such that the top panel is in contact with the carton conveyor 421, and with the opposing side panels extending either side thereof, transverse to the direction of motion of the carton blank 413 upon the carton conveyor 421. Some means, known in the art, is employed to fold the side panels of the carton blanks 413 downwardly as they are conveyed upon the carton conveyor 421, to arrive at a partially erected, "U"-shaped carton 418. Once partially erected in this manner, the cartons 418 are engaged by the primary grippers of the sliding head 432 of the third tool 417.

Once the primary grippers of the head 432 of the third tool 417 have successfully engaged with the "U"-shaped partially erected cartons 418 on the carton conveyor 421, those cartons 418 are picked from the carton conveyor 421 and conveyed over to a position above the third conveyor 423, by the third tool 417. As the cartons 418 are so conveyed, the head 432 of the third tool 417 returns to an initial position extending upstream to the direction of motion of the articles on the third conveyor 423. From this initial position, once the head 432 of the third tool 417 is positioned over the third conveyor 423, the head 432 is accelerated in a downstream direction of the flow of articles on the third conveyor 423, until the carton engaged by the primary grippers of the head 432 of the third tool 417 have the same velocity as selected articles disposed on the third conveyor 423. Once these velocities are matched, the cartons 418 are lowered, by the third tool, down over those selected articles A. When correctly positioned over the selected articles A, the cartons 418 are released from engagement with the primary grippers of the head 432 of the third tool 417, which head is then withdrawn away from the third conveyor 423 and returned to a position over the carton conveyor in readiness to engage a subsequent selection of partially erected "U"-shaped cartons 418.

Once the cartons 418 have been positioned over the selected articles on the third conveyor 423, the resulting packages 420 are subsequently sealed by some means known in the art, such as by folding bottom closure flaps hinged to the opposing side panels upwardly into the plane of the bottom of the carton 418, and securing them to one another to maintain the bottom of the carton 418 in a closed condition.

Optionally, the fourth tool 422 may also be employed in the above process of transferring cartons 418 from the carton conveyor 421 onto articles on the third conveyor 423. The Figures 35 to 37 illustrate an exemplary system wherein the fourth tool 422 is so used. The heads 432 of each of the third and fourth tools 417, 422 have three primary grippers, and are therefore capable of gripping three cartons 418 from the carton conveyor 423 simultaneously. The third tool 417 is therefore controlled to engage with the trailing three cartons 418 of every six cartons that pass through its working reach, and the fourth tool 422 is controlled to engage with the cartons that are not engaged by the third tool 417. The fourth tool 422 has identical features to the third tool 417 and operates in exactly the same way to pick cartons 418 from the carton conveyor 421 and to place those cartons on selected articles A on the third conveyor 423.

Illustrated in the Figures 35 to 37, is a system wherein the third conveyor 423 conveys two separate rows of groups of articles A. The third tool 417 picks sets of three cartons 418 as described above and deposits them upon three selected groups of articles in the nearest of the two aforementioned rows. The fourth tool 422 picks sets of three cartons 418 from the carton conveyor 421 and places them on three selected groups of articles A in the furthest of the two aforementioned rows. Thus the third tool 417 is responsible for placing cartons on each of the articles in the nearest row of the third conveyor, whilst the fourth tool 422 is responsible for placing cartons 418 on each of the groups of articles in the furthest row of the third conveyor 423. By operating in this manner, the two tools 417, 422 may be placed side by side in the direction of the flow of articles A on the third conveyor 423, and fulfil the above functions without interfering with one another.

The primary grippers of the sliding head 432 allow the cartons 418 to be engaged whilst they are pre-folded into a "U"-shaped configuration. This is advantageous in that such a carton configuration allows the articles to which the carton is applied to be grouped closer together. This is because the vertical side panels of the "U"-shaped carton 418 require negligible space either side of the group of articles A. By decreasing the necessary spacing between the groups of articles to be packaged, it is possible to accommodate different rows of groups, side by side, as is shown in the illustrated embodiment, without increasing the overall dimensions of the system. The gripper elements 1004 described above are an example of the primary grippers that could be used to engage these "U"-shaped cartons 418.

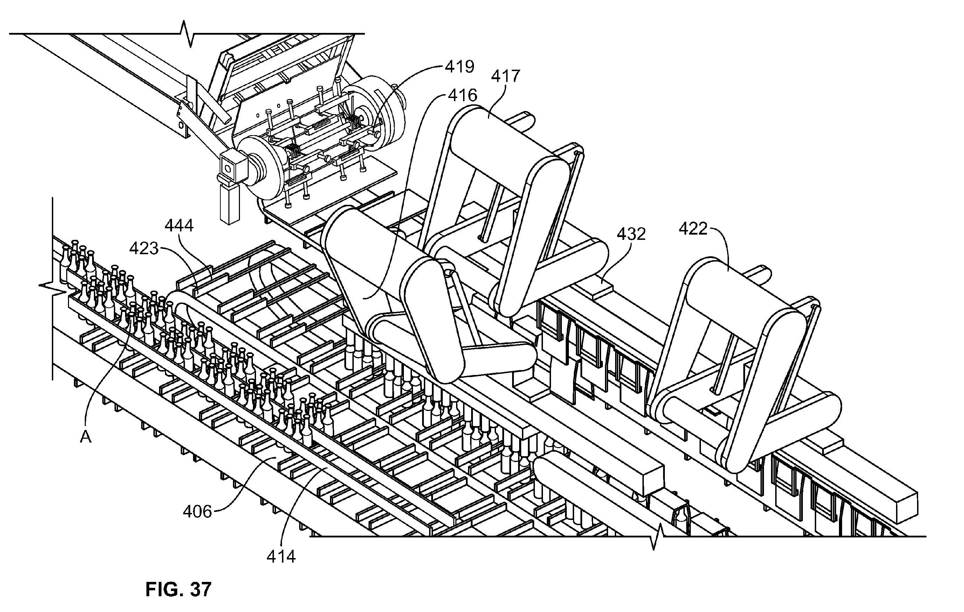

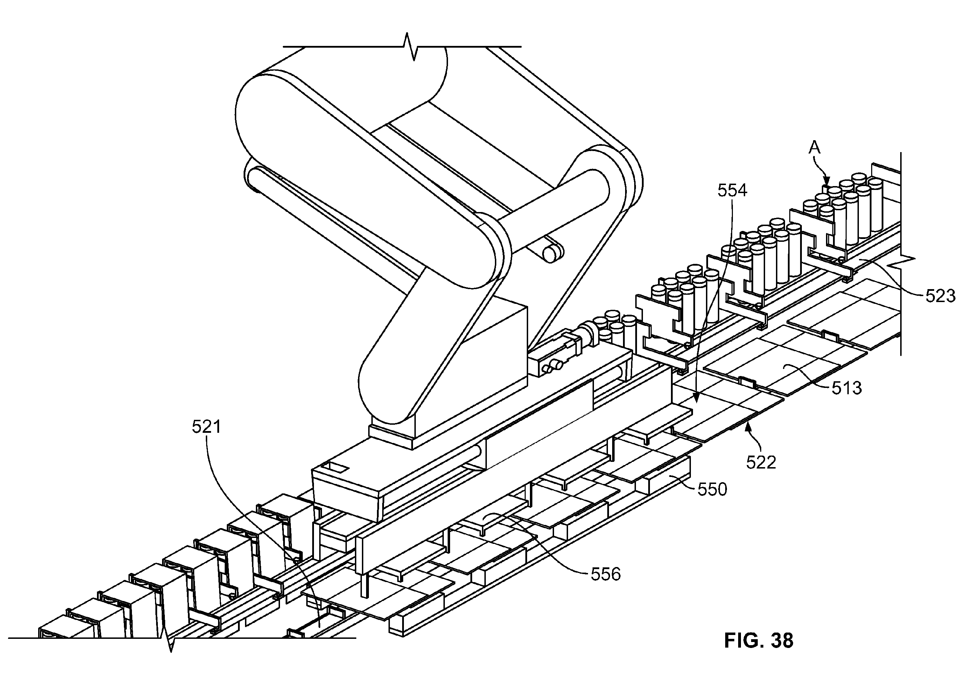

It is contemplated that the "U"-shaped cartons described above may be replaced by carrier type cartons shown in Figures 38 to 42. In order to accommodate this differing type of carton, it is contemplated that the primary grippers, such as those shown in Figure 37, of the relevant tools, may be exchanged with those shown in Figures 38 to 42, which are capable of at least partially setting up the carton by following the steps described below. The Figures show alternative primary grippers attached to the sliding head. These alternative primary grippers comprise engagement means to engage with an upper panel of the carton, and protrusions 562 that depend perpendicularly away from a contact surface of the engagement means.

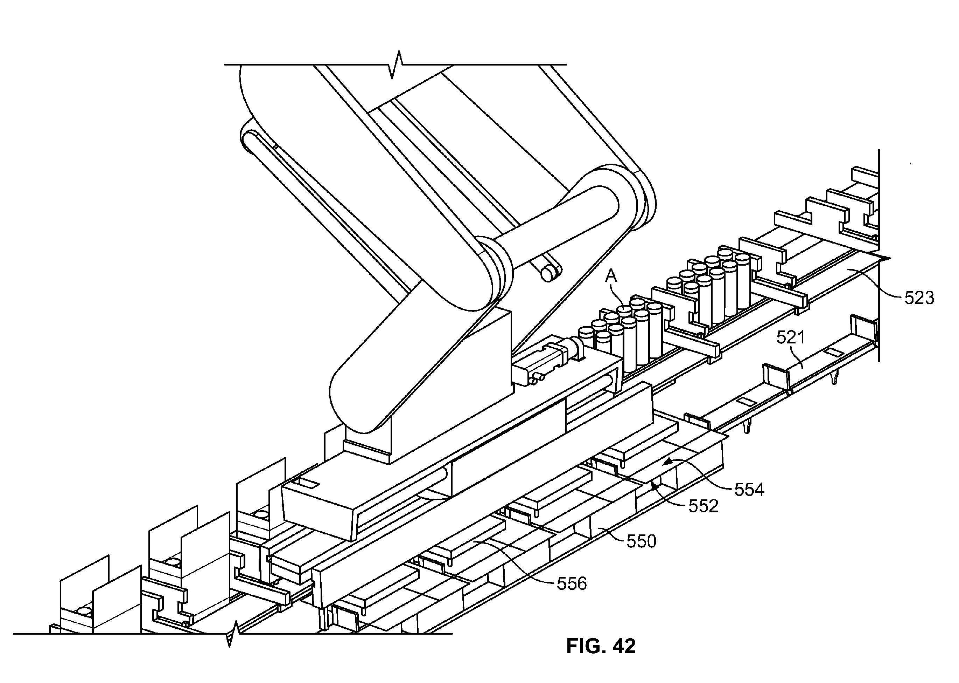

In order to partially erect a carrier carton 518 as shown in Figure 42, additional engagement tools 550 are disposed beneath the carton conveyor 521. These engagement tools 550 are operable to move upward into contact with a lower panel 552 of the carton blank, and there to engage with that panel. The engagement tool 550 is further operable to move in unison with the motion of the carton blank 513 upon the carton conveyor.

In use, the alternative primary grippers 556 are brought down into engagement with an upper panel 554 of the carton blank 513, and the engagement tools 550 are brought up into contact with a lower panel 552 of the carton blank, wherein said upper panel 554 and said lower panel 552 are chosen such that, when the carton 518 is fully erected, those panels 552, 554 are opposite one another. Once the engagement has been achieved, the alternative primary grippers 556 are lifted away from the engagement tool 550, thereby erecting the carton 518 from the carton blank. Since the upper panel 552 is hinged to the lower panel 554 via side panels 560, it is necessary to bring the alternative primary grippers 556 and engagement tools 550 into vertical alignment with one another as the two are separated, so as to allow the carton blank 513 to become setup into a substantially tubular configuration. The protrusions 562 come into contact with the side panels 560 connecting the upper and lower panels 552, 554 of the carton.

Once the carton 518 has been set up into a tubular configuration, the engagement tool 550 disengages the lower panel 552 of the carton 518, and the carton 518 is then lifted off the carton conveyor 521 and rotated 90 degrees such that one end of the tubular carton is disposed lowermost. The carton 518 is transferred, in this orientation, into a position above the articles A that are to be loaded into the carton, and the carton 518 is brought down over those articles on the third conveyor 523. Once correctly positioned, the carton 518 is released by the alternative primary grippers 556, and the loaded carton is passed onward for the lowermost end of the tubular carton to be closed by some means known in the art.

The changeover of the primary gripper 556 on the sliding heads may be effected automatically, for example by the tool docking with a changeover station, or manually by user intervention. It is also contemplated that the entire sliding head may be exchanged, rather than exchanging the primary grippers of a single sliding head. This would allow, for example, changes from a vacuum seal gripper to a mechanical gripper, which would require different infrastructure in the head in order to operate (such as pressure hoses).

Each of the tools discussed above may take the form of a full robotic arm having up to 6-axis movement, or may alternatively be provided by articulated linkages having suitable actuator and control means as known in the art, so as to move the sliding heads in the manner described above.

It is contemplated that each of the above system embodiments may be arrived at using substantially the same physical layout of conveyors and tools, by making corresponding adjustments to the control of those conveyors and tools. Thus, the above described system has a high degree of flexibility, in that it can accommodate a large degree of variation in terms of input/output formats, and can quickly be changed from one format to another by altering the control of the tools and conveyors, and by substituting, where necessary, different blanks and articles.

In the accompanying Figures, the exemplary embodiments of the tools are articulated arms that are each controlled by a suitable computer controller (being either a central controller for all the tools used in the system, or alternatively an individual controller for each tool). It is contemplated that other articulated tools might be used instead of the illustrated tools; such replacements might take the form of fully 6-axis robotic arms for example.

The sliding heads fitted to the tools allow the throughput of the system to be maximised by avoiding the need to stop the conveyor belt to allow successive sets of articles or cartons to be engaged by the tools. By matching the velocity of the primary grippers of the heads with the articles/cartons to be engaged, there is also significantly reduced wear to the system and likelihood of damage to the articles/cartons. Furthermore, the nature of the sliding heads allows the footprint of the system to be minimised, by allowing substantially transverse transfer of articles and cartons between the parallel conveyors, whilst still benefitting from the aforesaid velocity matching.

The above embodiments need not be mutually exclusive of one another. For example, the cartons 318 of the fourth embodiment, may go on to be stacked, in one or more tiers, in tertiary packaging 3 disposed on the tertiary packaging conveyor 8 in exactly the same way as is described in relation to the packages of the first embodiment, above.

Directional limitations in the above description, such as "up", "down", "inner", "outer", "vertical" are used to aid clarity only and are not limiting to the scope of the invention. It is contemplated that the present invention may be orientated differently to that shown in the exemplary embodiments without departing from the scope of the present invention as set out in the attached claims.

## Claims

1. A movable head for a tool for packaging articles, which head comprises a means of securement to a tool, a chassis, and one or more gripper elements that are moveable relative to the chassis and that are capable of engaging items from a continuously moving stream of items.

2. The moveable head according to claim 1, further comprising a drive means that is mechanically coupled to the gripper elements, such that the drive means is operable to accelerate the gripper elements relative to the chassis.

3. The moveable head according to claim 2, wherein the or each gripper element is slidably disposed upon a runner, and the drive means is operable to move the gripper means along that runner.

4. The moveable head according to claim 3, wherein the or each gripper element is fixed in position relative to a carriage, which carriage is slidably connected to the chassis, and wherein the drive means is operable to move the carriage relative to the chassis.

5. The moveable head according to any one of claims 1 to 4 wherein the drive means rotates one of a nut or a threaded shaft about which the nut is disposed, and the gripper element is attached to the other of a nut or a threaded shaft about which the nut is disposed.

6. The moveable head according to any one of claims 1 to 4 wherein the drive means rotates a pinion that engages a rack, wherein the rack is fixed to one of the gripper element or the chassis, and the pinion is fixed relative to the other of the gripper element or the chassis.

7. The moveable head according to claim 4, comprising a series of gripper elements disposed along the runner, and wherein articulated arrangements comprising a first member hinged to a second member, at adjacent ends thereof, to form an elbow, connect the gripper elements together.

8. The moveable head according to claim 7, wherein the articulated arrangements are disposed both sides of the runner, and wherein, between any two gripper elements that are hinged together by an articulated arrangement on a first side of the runner, is disposed a gripper element that is hinged to one of those two gripper elements, by an articulated arrangement disposed on an opposing second side of the runner.

9. The moveable head according to claim 7 or claim 8, wherein the elbows of each articulated arrangement comprise a follower that follows the path of a guide rail, and wherein spacing of the gripper elements that are linked to one another by those articulated arrangements is effected by moving that guide rail perpendicular to the runner, and thereby causing those articulated arrangements to hinge at their elbows.

10. The moveable head according to any one of claims 1 to 9, wherein the gripper elements are shaped so as to be capable of engagement with "U"-shaped cartons.
